(19) Europäisches Patentamt
European Patent Office
Office européen des brevets

(11) Veröffentlichungsnummer: **0 312 801 A1**

(12) **EUROPÄISCHE PATENTANMELDUNG**

(21) Anmeldenummer: **88115736.6**

(51) Int. Cl.4: **B60K 41/22 , B60K 41/06**

(22) Anmeldetag: **23.09.88**

(30) Priorität: **14.10.87 HU 462787**

(43) Veröffentlichungstag der Anmeldung: **26.04.89 Patentblatt 89/17**

(84) Benannte Vertragsstaaten: **AT DE FR GB**

(71) Anmelder: **Csepel Autogyár**
**Pf. 38**
**H-2311 Szigetszentmiklos(HU)**

(72) Erfinder: **Simonyi, Sándor, Dr.-Ing.**
**Petöfi u. 59**
**H-3102 Salgótarján(HU)**
Erfinder: **Töröcsik, László, Dipl.-Ing.**
**Kakukk u. 10/b**
**H-1126 Budapest(HU)**
Erfinder: **Válóczi, György, Ing.**
**Budapesti u.40**
**H-3104 Salgótarján(HU)**

(74) Vertreter: **Patentanwälte Viering & Jentschura**
**Steinsdorfstrasse 6**
**D-8000 München 22(DE)**

(54) **Verfahren zur Stufenschaltung von einem automatischen oder synchronisierten mechanischen Wechselgetriebe in Kraftfahrzeugen.**

(57) Die Funktionen M(y) und M(n) zwischen dem Moment M des Motors, der Position y des Gaspedals und der Drehzahl n werden in einer elektronischen Steuereinheit (13) gespeichert, wo die zum gemessenen Gassignal und zum gemessenen Drehzahlsignal gehörenden Momentwerte ausgesucht werden und ein Belastungssignal s erzeugt wird. Das Signal s wird mit einem Konstanten Aufschaltungs- Belastungswert $S_f$ und mit einem Konstanten Rückschaltungs- Belastungswert $S_v$ verglichen, und ein Befehl zur schaltung von Getriebe (2) und Reibkupplung (3) wird an die servoeinheit (14) gegeben.

13
9
11
14
15
17
18
16
20
21
19
12

Fig.7

EP 0 312 801 A1

Xerox Copy Centre

# VERFAHREN ZUR STUFENSCHALTUNG VON AUTOMATISCHEM ODER SYNCHRONISIERTEM MECHANISCHEM WECHSELGETRIEBE IN KRAFTFAHRZEUGEN

Die Erfindung bezieht sich auf ein Verfahren, mit Hilfe dessen der optimale Wert der Schaltungspunkte der Stufenschaltung in Kraftfahrzeugen bestimmt werden kann. Das Verfahren kann bei automatischen Wechselgetrieben und bei automatisch betriebenen mechanischen Wechselgetrieben gleichfalls verwendet werden.

Es ist bekannt, dass sowohl bei automatischen Wechselgetrieben als auch bei automatisch betätigten mechanischen Wechselgetrieben diejenigen Entschlüsse des Fahrzeugfahrers mit entsprechender Steuerung ersetzt werden sollen, die zur Schaltung der Gangstufen der traditionellen Wechselgetriebe führen.

Zu Beginn wurden je Gangstufe nur je ein Aufschaltungs- und Rückschaltungs-Geschwindigkeitswert bestimmt, diese Steuerungen konnten aber weder die Belastung des Kraftfahrzeuges, noch den Aufwärtsgang oder den Vorfahrtswillen berücksichtigen. Aus diesem Grund wurden zwecks Entwicklung der Empfindlichkeit der Steuerung verschiedene Lösungen ausgearbeitet.

Bei den automatischen Wechselgetrieben des Typs "GMP" einer sowjetischen Firma - laut dem Artikel in "Automobilnaja promüshlennosty" Nr. 2/1986 - wurde der Belastungsbereich des Motors in drei Strecken geteilt. Das bedeutet technisch, dass die Hublänge des Gaszuführgestänges in drei Strecken geteilt ist und zu jeder Strecke andere Stufenschaltungspunktreihe bestimmt wurde.

Eine im wesentlichen ähnliche Lösung ist in der US-PS 4.468.987 beschrieben. Auch hier wird aus der Gaspedalstellung auf die Belastung gefolgt und je eine Schaltungspunktreihe zum unbelasteten, zum belasteten und zum Bremszustand bestimmt. Diese Lösungen können zum Beispiel den Beschleunigungswillen des Fahrzeugfahrers nicht in entsprechendem Mass berücksichtigen.

Die in der US-PS 4.414.863 beschriebene Lösung ist mehr vollständig. Bei diesem System ist die Stufenschaltung über die Trennung der Belastungsstrecken hinaus dadurch "sanfter" gemacht, dass die Abschaltung verzögert wird. Ein weiteres Vorteil dieser Lösung besteht darin, dass diese auch über ein Verbotsprogramm zur Beschleunigung verfügt, wodurch verhindert ist, dass das Wechselgetriebe bei Beschleunigung - wenn es bereits aufge schaltet hat - wieder zurückschaltet. Auf diese Weise ist das vollständige "Ausziehen" des Motors gesichert.

Die Belastung ist bei der Lösung in der Patentbeschreibung DE-15 80 611 auf andere Weise berücksichtigt. Hier werden die aus der Gaspedalstellung und aus der Geschwindigkeit erzeugten elektrischen Signale addiert, und das System wählt die entsprechende Schaltungspunktreihe aufgrund der Summe der Addition.

Bei diesem Systemen strebt man danach, das ideale Fahren derart anzunähern, dass je mehrere Schaltungspunktreihen bestimmt werden. In der Patentbeschreibung DE-27 56 719 ist eine Lösung beschrieben, die zu Erdbaumaschinen ausgearbeitet wurde. Hier sind gesonderte Schaltungspunktreihen zu Fahrts- und Arbeitsbetrieben bestimmt. Ähnliche Lösungen sind in den Patentbeschreibungen DE-19 58 944, DE-24 25 607, US-PS 4.263.326 beschrieben. Bei der letzterwähnten Lösung ist es besonders interessant, dass die vollständige Steuerung auf rein hydrulischem Weg gelöst und die Belastung aufgrund der Motordrehzahl geprüft ist.

In der Patentbeschreibung DE-19 54 783 ist ein Beispiel zur weiteren Korrektionsmöglichkeit beschrieben. Hier kann der Fahrzeugfahrer die automatisch gewählten Schaltungspunkte mittels einer Umschaltung erheben, wenn er bei einer Aufwärtsfahrt so beurteilt, dass die durch die Steuerung gewählte Stufe zu hoch ist.

Auch bei der Lösung laut der Patentbeschreibung DE-20 13 079 hat der Fahrzeugfahrer die möglichkeit, die Steuerung bei Aufwärtsfahrt zu beeinflussen, aber auch die Steuerung selbst ist fähig, bestimmte Veränderungen im Verkehrszustand zu berücksichtigen. So sind der Winkel der Steigung, die Beschleunigung des Kraftfahrzeugs, das Mass der Kurve durch Fühler geprüft.

Auch bei der Lösung laut der US-PS 4.044.634 ist die Beschleunigung des Kraftfahrzeuges durch Fühler gemessen, hier wird die Steuerung im Falle einer intensiveren Beschleunigung nicht in eine höhere Stufe schalten. Auch diese Steuerung hat das "Ausziehen" des Motors als Folge.

Es tauchte derjenige Anspruch auf, die mit mechanischem Wechselgetriebe ausgestatteten Kraftfahrzeuge für weniger geschickte Menschen oder Menschen, die nicht fähig sind, die Pedale und den Schalthebel entsprechend zu bedienen, mit Hilfe von ergänzenden Armaturen mehr geeignet zum Fahren zu machen.

In der US-PS 4.194.608 ist eine Lösung beschrieben, die zur Erfüllung der obenerwähnten Aufgabe ausgearbeitet wurde. Die Stufenschaltung des mechanischen synchronisierten Wechselgetriebes ist durch das hier bekanntgemachte modernste Wählen der Schaltungspunkte gesteuert. Da die Drehzahl der Kurbelwelle des Motors und die Drehzahl der Eintriebswelle des Wechselgetriebes nach dem Aufschalten voneinander abweichend sind, wird die Asynchronität derweise beseitigt, dass das - übrigens automatisierte - Schliessen des Wechselgetriebes verzögert und während dessen die Motordrehzahl zurückgeregelt wird. Das ist ein ziemlich kompliziertes System, es erfordert vom üblichen viel mehrere Grundinformationen, zum Beispiel Motorleerlaufsignal, das Wahrnehmen des vollen Hubs der Kupplung, das Messen der Bremsung, des Neigungswinkels. Auf ähnlichem Prinzip funktioniert auch die in der GB-PS 2.119.460 beschriebene Lösung, ist aber viel einfacher.

Wie es aus der Durchsicht der verschiedenen Entwicklungstendenzen zu sehen ist, ist die Bestimmung der optimalen Schaltungspunkte bisher nicht gelungen. Für die daraus entstehenden Probleme sind mehr oder weniger gute ersetzende Lösungen ausgearbeitet worden, aber auch bei besten Lösungen ist ein das allgemeine Steuerprogramm verändernder oder dieses vollständig ausschaltender besonderer Befehl für die Fälle von besonderen Belastungen /Aufwärtsgang, Vorfahrt/ erforderlich.

Zielsetzung der Erfindung ist, eine derartige optimale Steuerung auszuarbeiten, mit deren Hilfe zu jedem Belastungszustand ideale Schaltungspunkte vom Fahrzeugfahrer während der handbetätigten Stufenschaltung bestimmt werden können. Eine weite Zielsetzung der Erfindung ist, dass diese Lösung bei automatischen Wechselgetrieben und mechanischen synchronisierten Wechselgetrieben gleichfalls verwendet werden kann.

Zur Lösung führte diejenige Erkennung, dass der tatsächliche Belastungszustand - aus dem später mehr ausführlich zu beschreibenden Grund - allein durch die Stellung des Gaspedals, genauer gesagt durch das Mass der Gaszufuhr nicht exakt ausgedrückt werden kann.

Wie bekannt, hängt nämlich die Leistungsfähigkeit des Motors über die Obenerwähnten hinaus auch von seiner je weiligen Drehzahl ab, wobei keine der Funktionen linear ist. Aus der gemeinsamen Analyse der Gaszufuhr-Moment-und der Drehzahl-Moment-Funktion kann also die jeweilige tatsächliche Belastung bestimmt werden. Eine weitere Erkenntnis ist, dass wenn sowohl die Belastungsänderung als auch deren Grund fortlaufend analysiert wird, sollen die Schaltungspunkte immer nur im erforderlichen Mass verschoben werden. Dazu ist auch die Analyse der Drehzahl genügend.

Die Erfindung bezieht sich also auf ein Verfahren zur Stufenschaltung von automatischen oder automatisierten mechanischen synchronisierten Wechselgetrieben in Kraftfahrzeugen, in deren Antriebskette mittels einem Verbrennungsmotor ein automatisches Wechselgetriebe durch einen darin eingebauten hydrodynamischen Drehmomentwandler oder gegebenenfalls durch eine diesen kurzschliessende Trockenreibkupplung, oder ein automatisiertes mechanisches synchronisiertes Wechselgetriebe durch eine Trokkenreibkupplung, unmittelbar mittels dem Wechselgetriebe und/oder mittels der Kardanwelle angetrieben wird, dann mittels mindestens einem Differentialwerk und daran angeschlossenen Halbwellen mindestens ein Paar Räder des Kraftfahrzeuges gedreht wird, und die Stufenschaltung des Wechselgetriebes /hier auch die Betätigung der Trockenreibkupplung und gegebenenfalls des hydrodynamischen Drehmomentwandlers/ mit Hilfe von Hilfsenergie, die mittels durch elektrisches Signal gesteuerten Wechselgetriebearmaturen, vorteilhaft durch elektromagnetische Ventile geregelt ist, durchgeführt wird. Das Verfahren wird derweise verwirklicht, dass die Funktion zwischen dem Motormoment und der Gaspedalstellung und die Funktion zwischen dem Motormoment und der Motordrehzahl bestimmt und in einer elektronischen Memorieneinheit gespeichert werden, mit Hilfe eines Gaspedalstellungsignalgebers ein elektrisches Gassignal, weiterhin mit Hilfe eines Drehzahlsignalgebers auch aus der Drehzahl der Kurbelwelle des Motors oder seines damit proportional rotierenden Bauteiles ein elektrisches Drehzahlsignal erzeugt werden, das Gassignal und das Drehzahlsignal in die elektronische Memorieneinheit geführt werden, wo die zum gemessenen Gassignal und zum gemessenen Drehzahlsignal gehörenden Momentwerte ausgesucht werden und aufgrund ihrer Vergleichung ein Belastungssignal erzeugt wird, das derart erzeugte Belastungssignal mit Hilfe einer die Belastung bewertenden Einheit mit einem den konstanten Vergleichungsaufschaltungswert und den konstanten Vergleichungs-Rückschaltungswert ausdrückenden Signal wieder verglichen wird, das Drehzahlsignal mit Hilfe einer die Drehzahl bewertenden Einheit mit einem den konstanten Vergleichungs-Aufschaltungswert und den konstanten Vergleichungs-Rückschaltungswert ausdrückenden Signal verglichen wird, und bei Abnahme des Belastungssignals unterhalb das den Vergleichungs-Aufschaltungs-Belastungswert ausdrückende Signal und beim Steigen des Drehzahlsignals über das den Vergleichungs-Aufschaltungs-Drehzahlwert ausdrückende Signal mit Hilfe einer die Stufenschaltung steuernden Einheit den Wechselgetriebearmaturen ein Befehlsignal zur Schaltung in die höhere Gangstufe zugeführt wird, wogegen beim Steigen des Belastungs signals über das den Vergleichungs-Rückschaltungswert ausdrückende Signal oder beim Fallen des Drehzahlsignals unter das den Vergleichungs-Rückschaltungswert ausdrückende Signal mit Hilfe der die Stufenschaltung steuernden Einheit der Wechselgetriebearmatur ein Befehlsignal zur Schaltung in die niedrigere Gangstufe zugeführt wird.

Die Erfindung bezieht sich weiterhin auf ein Verfahren, das derweise durchgeführt wird, dass die Funktion zwischen dem Motormoment und der Gaspedalstellung und die funktion zwischen dem Motormoment und der Motordrehzahl bestimmt und in einer elektronischen Memorieneinheit gespeichert werden, mit Hilfe eines Gaspedalstellungsignalgebers ein elektrisches Gassignal erzeugt wird, weiterhin dass mit Hilfe eines Drehzahlsignalsgebers auch aus der Drehzahl der Kurbelwelle des Motors oder seines damit proportional rotierenden Bauteiles ein elektrisches Drehzahlsignal erzeugt wird, das Gassignal und das Drehzahlsignal in die elektronische Memorieneinheit geführt werden, wo die zum gemessenen Gassignal und zum gemessenen Drehzahlsignal gehörenden Momentwerte ausgesucht und mit ihrer Vergleichung ein Belastungssignal erzeugt wird; weiterhin aus der Drehzahl jedwelchen Bauteiles des mit der Antriebswelle des Stufenteils des Wechselgetriebes beginnenden und mit den Rädern endenden Teils der Antriebskette des Kraftfahrzeuges, oder aus der Durchschnittsdrehzahl jedwelchen Bauteilpaares derselben mit Hilfe eines Drehzahlsignalgebers und gegebenenfalls einer, der Transmission der jeweiligen eingeschalteten Gangstufe entsprechend mo difizierenden Gangstufenkorrektionseinheit ein Geschwindigkeitsdrehzahlsignal erzeugt wird, und das Belastungssignal mit Hilfe einer die Belastung bewertenden Einheit mit einem, den konstanten Vergleichungs-Aufschaltungswert und den konstanten Vergleichungs-Rückschaltungswert ausdrückenden Signal wieder verglichen wird, das Geschwindigkeitsdrehzahlsignal mit Hilfe einer die Drehzahl bewertenden Einheit mit einem den konstanten Vergleichungs-Rückschaltungswert ausdrückenden Signal vergleichen wird, und bei Verminderung des Belastungssignals unter das den Vergleichungs-Aufschaltungs-Belastungswert ausdrückende Signal und bei Erhöhung des Geschwindigkeitsdrehzahlsignals über das den Vergleichungs-Aufschaltungs-Drehzahlwert ausdrückende Signal mit Hilfe einer die Stufenschaltung steuernden Einheit den Stufenschalterarmaturen ein Befehlsignal zur Schaltung in eine höhere Gangstufe zugeführt wird, wogegen bei Erhöhung des Belastungssignals über das den Vergleichungs-Rückschaltungswert ausdrückende Signal oder bei Verminderung des Geschwindigkeitsdrehzahlsignals unter das den Vergleichungs-Rückschaltungswert ausdrückende Signal mit Hilfe der die Stufenschaltung steuernden Einheit der Stufenschalterarmatur ein Befehlsignal zur Schaltung in eine niedrigere Gangstufe zugeführt wird.

Bei einer vorteilhaften Ausführungsart jedwelchen erfindungsgemässen Verfahrens wird das Belastungssignal mit Hilfe der das Belastungssignal bewertenden Einheit mit einem, den zum Kurzschluss des hydrodynamischen Momentwandlers gehörenden Vergleichungs-Kurzschluss-Belastungs wert ausdrückenden Signal, das Drehzahlsignal der Kurbelwelle des Motors oder das Geschwindigkeitsdrehzahlsignal mit Hilfe der die Drehzahl bewertenden Einheit mit einem, den zum Kurzschluss des hydrodynamischen Momentwandlers gehörenden Vergleichungs-Kurzschluss-Drehzahlwert ausdrückenden Signal und mit einem, den zur Auflösungsdrehzahl des hydrodynamischen Momentwandlers gehörenden Vergleichungs-Auflösungdrehzahlwert ausdrückenden Signal verglichen, und bei Erhöhung des Drehzahlsignals über das den Vergleichungs-Kurzschluss-Drehzahlwert ausdrückende Signal und bei Verminderung des Belastungssignals unter das den Vergleichungs-Kurzschluss-Belastungswert ausdrückende Signal mit Hilfe einer, die Kupplungsüberbrückung steuernden Einheit der den hydrodynamischen Momentwandler kurzschliessenden Stufenschalterarmatur ein Kurzschlussbefehlsignal zugeführt wird, und bei Verminderung des Drehzahlsignals unter das den Vergleichungs-Auflösungdrehzahlwert ausdrückende Signal ein Befehlsignal zur Auflösung zugeführt wird.

Bei einer weiteren vorteilhaften Ausführungsart jedwelchen erfindungsgemässen Verfahrens wird asd Drehzahlsignal der Kurbelwelle des Motors oder das Geschwindigkeitsdrehzahlsignal in eine Memorieneinheit geführt, und das momentane Drehzahlsignal wird mit dem die Rückschaltung erzeugenden Befehlsignal der die Stufenschaltung steuernden Einheit gespeichert, dann wird mit Hilfe einer, das Vergleichungs-Belastungssignal erzeugenden Einheit das den konstanten Vergleichungs-Belastungswert ausdrückende Signal und/oder gegebenenfalls das den konstanten Vergleichungs-Kurzschluss-Belastungswert ausdrückende Signal um dem vom gespeicherten Drehzahlsignal abhängigen Korrektionswert vermindert.

Bei einer dritten vorteilhaften Ausführungsart jedwelchen erfindungsgemässen Verfahrens wird das Drehzahlsignal der Kurbelwelle des Motors oder das Geschwindigkeitsdrehzahlsignal in eine Memorieneinheit geführt, und das momentane Drehzahlsignal wird mit dem die Rückschaltung erzeugenden Befehlsignal der die Stufenschaltung steuernden einheit gespeichert, dan wird mit Hilfe einer das Vergleichungs-Drehzahlsignal erzeugenden Einheit das den konstanten Vergleichungs-Aufschaltungsdrehzahlwert ausdrückende Signal und/oder gegebenenfalls das den konstanten Vergleichungs-Kurzschluss-Drehzahlwert ausdrückende Signal um dem vom gespeicherten Drehzahlsignal abhängigen Korrektionswert vermindert.

Bei einer vierten vorteilhaften Ausführungsart jedwelchen erfindungsgemässen Verfahrens wird mit Hilfe des die Rückschaltung erzeugenden Befehlsignals der die Stufenschaltung steuernden Einheit das den konstanten Vergleichungs-Aufschaltungs-Drehzahlwert und/oder gegebenenfalls den konstanten Vergleichungs-Kurzschluss-Drehzahlwert ausdrückende Signal um einen bestimmten Wert erhöht, oder das den konstanten Vergleichungs-Aufschaltungs-Belastungswert und/oder gegebenenfalls den konstanten Vergleichungs-Kurzschluss-Belastungswert ausdrückende Signal um einen bestimmten Wert vermindert.

Bei einer fünften vorteilhaften Ausführungsart jedwelchen erfindungsgemässen Verfahrens wird aus dem Drehzahlsignal der Kurbelwelle des Motors oder aus dem Geschwindigkeitsdrehzahlsignal in einer die Drehzahlveränderung bewertenden Einheit ein Drehzahländerungssignal und gegebenenfalls aus dem Belastungssignal in einer die Belastungsänderung bewertenden Einheit ein Belastungsänderungssignal erzeugt, und mit Hilfe des die Rückschaltung in eine niedrigere Gangstufe erzeugenden Befehlsignals der die Stufenschaltung steuernden Einheit wird aus den momentanen Werten bei einem negativen Drehzahländerungssignal und bei einem, die Drehzahl der Kurbelwelle des Motors ausdrückenden Drehzahlsignal unterhalb des Schwellenwertes oder einem negativen Belastungsänderungssignal ein den konstanten normalen Vergleichungs-Belastungswert ausdrückendes Signal erzeugt; bei einem positiven Drehzahländerungssignal und bei einem, die Drehzahl der Kurbelwelle des Motors ausdrückenden Drehzahlsignal oberhalb des Schwellenwertes oder einem positiven Belastungsänderungssignal wird ein vom vorigen geringeres, konstanten Vorfahrts-Vergleichungs-Belastungswert ausdrückendes Signal erzeugt; weiterhin wird bei einem negativen Drehzahländerungssignal und einem die Drehzahl der Kurbelwelle des Motors ausdrückenden Drehzahlsignal oberhalb des Schwellenwertes oder positiven Belastungsänderungssignal ein ganz geringes, konstanten Aufwärtsgang-Vergleichungs-Belastungswert ausdrückendes Signal erzeugt und die derweise erzeugten Signale werden in die die Belastung bewertende Einheit geführt.

Bei einer weiteren vorteilhaften Ausführungsart jedwelchen erfindungsgemässen Verfahrens wird mit dem die Rückschaltung in eine niedrigere Gangstufe erzeugenden Befehlsignal der die Stufenschaltung steuernden Einheit bei einem negativen Drehzahländerungssignal und bei einem, die Drehzahl der Kurbelwelle des Motors ausdrückenden Drehzahlsignal oberhalb des Schwellenwertes oder einem positiven Belastungsänderungssignal ein ganz kleines, konstanten Aufwärtsgang-Vergleichungs-Belastungswert ausdrückendes Signal erzeugt, in jedem anderen Fall wird ein, den konstanten normalen Vergleichungs-Belastungswert ausdrückendes Signal erzeugt.

Schliesslich sind bei einer vorteilhaften Ausführungsart jedwelchen erfindungsgemässen Verfahrens das den Vergleichungs-Aufschaltungs-Belastungswert ausdrückende Signal und das den Vergleichungs-Kurzschluss-Belastungswert ausdrückende Signal gleich, und bei Verminderung des Belastungssignals unter das den Vergleichungs-Aufschaltungs-Belastungswert ausdrückende Signal und bei Erhöhung des für die die Drehzahl bewertende Einheit gewählten Drehzahlsignals über das den Vergleichungs-Aufschaltungs-Drehzahlwert ausdrückende Signal wird der die Kupplungsüberbrückung steuernden Einheit gleichzeitig mit dem Befehlsignal der die Stufenschaltung steuernden Einheit zur Schaltung in eine höhere Gangstufe ein Verbotsignal zugeführt.

Die Erfindung wird nachstehend anhand einiger Verfahrensvariante mit Hilfe der beiliegenden Zeichnungen näher erläutert. Es zeigen

Fig. 1 - die Antriebskette eines Autobusses in schematischer Darstellung,

Fig. 2 - das Drehzahl-Moment-Diagramm des Motors,

Fig. 3 - das Gaspedalstellung-Moment-Diagramm des Motors,

Fig. 4 - die Schaltungsanordnung einer möglichen Variante der das erfindungsgemässe Verfahren durchführenden elektronischen Steuereinheit,

Fig. 5 - die von der Drehzahl und Belastung abhängigen Bedingungen in graphischer Darstellung,

Fig. 6 - die Lage des Drehzahl-Moment-Diagramms des Motors und des hydrodynamischen Momentwandlers im Vergleich zueinander,

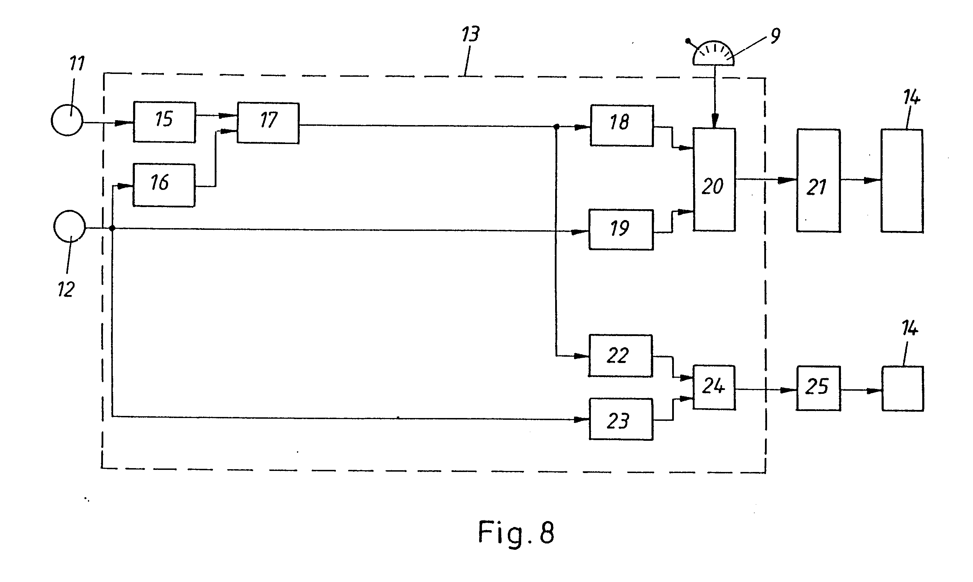

Figuren 7 - 15 - die Blockschemen bezüglich Durchführung'der Verfahrensvarianten.

Das erfindungsgemässe Verfahren kann - wie das aus den vorangehenden hervorgeht - in mehreren Varianten durchgeführt werden, und findet sowohl bei automatischen Wechselgetrieben als auch bei automatisch betätigten mechanischen synchronisierten Wechselgetrieben Verwendung. Zur tatsächlichen Realisierung der Erfindung wurde eine elektronische Einheit gebaut, die vom eingespeicherten Programm abhängig bei jedwelcher Verfahrenzvariante und bei jedwelchem Wechselgetriebe verwendet werden kann. Nachstehend wird erst die Grundvariante bekanntgemacht, bei den anderen Varianten werden nur die Abweichungen beschrieben. Es soll noch vorausgeschickt werden, dass zwecks genauem Verständnis erst die einfacheren und später die komplizierteren Schritte des Verfahrens, jeder Schritt aufgrund eines gesonderten Blockschemas beschrieben werden. Aus diesem Grund wurden die Blockschemen derart gezeichnet, dass ihre Aufbau aufeinander auch visuell gut wahrzunehmen ist.

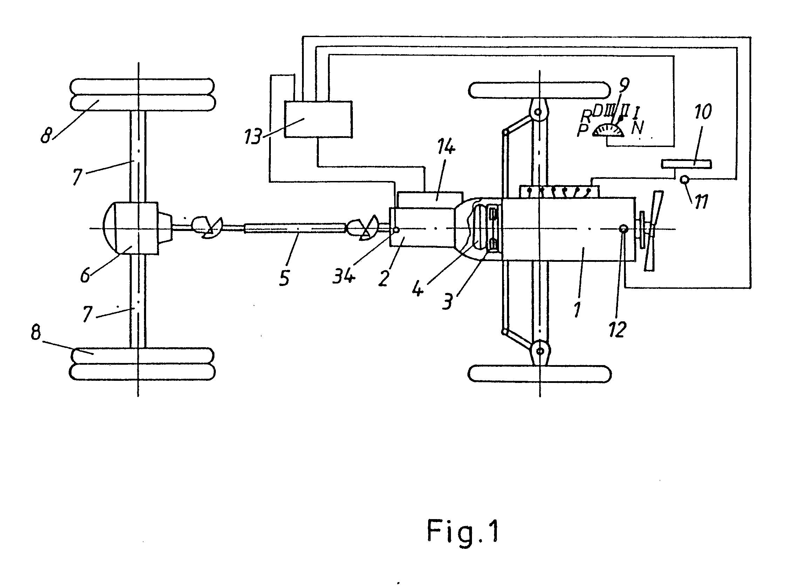

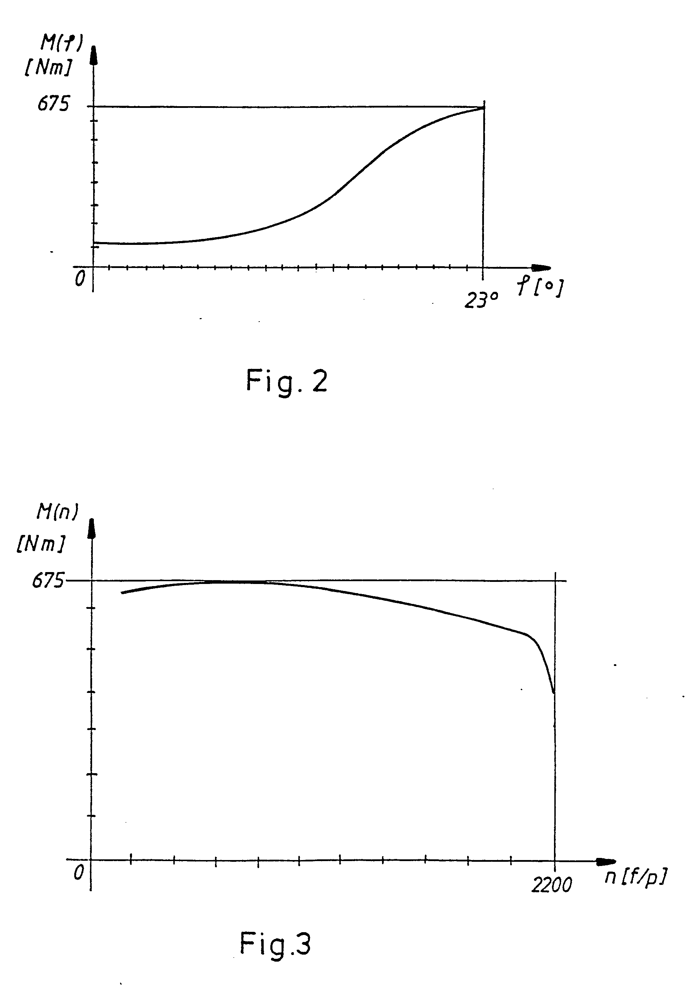

Die tatsächlich realisierte Verfahrensvariante wurde zu einem städtischen Autobus gefertigt, dessen Kraftquelle - wie aus Fig. 1 ersichtlich - ein Motor 1 ist. Der Motor 1 ist ein Sechszylinder-Dieselmotor mit einer Leistung von 140 kW, dessen Gaspedalstellung-Moment-Diagramm /M = f/$\phi$// in Fig. 2, und dessen Drehzahl-Moment-Diagramm /M = f/n// in Fig. 3 dargestellt sind.

Die Leerlaufdrehzahl beträgt $n_a$ = 500-500 U/Min, die niedrigste Betriebsdrehzahl: $n_{ümin}$ = 880 U/Min, die höchste Betriebsdrehzahl: $n_{ümax}$ = 1800 U/Min, die höchste Drehzahl: $n_{max}$ = 2200 U/Min.

Durch den Motor 1 ist ein Wechselgetriebe 2 getrieben. Das Wechselgetriebe 2 ist ein automatisches Wechselgetriebe mit Planetengetriebe und vier Stufen /vier Vorwärtsgangstufen + eine Rückwärtsgangstufe/. Das Übertragungsverhältnis der Gangstufen: 3,43, 2,01, 1,42, 1,00. Die Eintriebswelle der Gangstufen ist durch einen hydrodynamischen Momentwandler 4 und eine diesen kurzschliessende Reibkupplung 3 an der Kurbelwelle des Motors 1 angeschlossen. Die Schaltung der Gangstufen und das Auflösen-Schliessen der Reibkupplung 3 ist durch elektromagnetische Ventile 14 gesteuert. Der theoretische durchschnittliche Geschwindigkeitswert der Stufenschaltung beträgt: bei Aufschaltung in die Gangstufe II 18 km/h, im die Gangstufe III 25 km/h, im die Gangstufe IV 40 km/h, bei Rückschaltung in die Gangstufe III 35 km/h, in die Gangstufe II 22 km/h, in die Gangstufe I 3 km/h, die Endgeschwindigkeit des Autobusses beträgt 80 km/h.

Die Austriebswelle des Wechselgetriebes 2 ist durch eine Kardanwelle 5 mit einem Differentialwerk 6 der hinteren Brücke, und das Differentialwerk 6 ist durch Halbwellen 7 mit den Rädern 8 verbunden. Durch die hier aufgezählten Bauteile ist die an sich bekannte Antriebskette des Autobusses gebildet.

Hier soll erwähnt werden, dass das erfindungsgemässe Verfahren auch bei Personenkraftwagen verwendet werden kann. Wie bekannt, sind das Wechselgetriebe und das Differentialwerk bei Personenkraftwagen mit Frontantrieb und Heckmotor im allgemeinen in einer Einheit gebaut, in der Antriebskette dieser Kraftfahrzeuge befindet sich also keine Kardanwelle.

Eine elektronische Steuereinheit 13 dient der Steuerung der elektromagnetischen Ventile 14, wobei die zur Steuerung nötigen Informationen durch Signalgeber erzeugt werden.

Eine der wesentlichen Informationen aus der hinsicht der Geschwindigkeitswahl ist das, auf welche Weise der Fahrzeugfahrer die Durchführung der Stufenschaltung für notwendig hält. Dazu dient der Stufenwählerschalter 9, mit anderem Namen der Kontroller, der entweder mit Arm oder mit Druckknopf ausgebildet werden kann. Mit Hilfe des Kontrollers können Befehle für die folgenden Schaltungslagen gegeben werden: das Wechselgetriebe 2 ist in Leer- oder neutraler Stellung N, schaltet nicht höher als Gangstufe I, schaltet nicht höher als Gangstufe II, schaltet nicht höher als Gangstufe III, schaltet auch in die direkte Gangstufe D, d.h. in die Gangstufe IV, schaltet in die Rückwärtsgangstufe R, schaltet in parkierende Bremslage P. Die Ausgänge I, II, III, D, R, P des Kontrollers 9 sind an den entsprechenden Eingängen der elektronischen Steuereinheit 13 angeschlossen.

In der Wirklichkeit ist es bei dem erfindungsgemässen Verfahren nicht nötig, dass der Fahrzeugfahrer die Schaltung einer oder mehrere Gangstufen mit dem Kontroller verbieten kann. Die jeweilige richtige Bestimmung der Aufschaltungsbedingungen schliesst nämlich aus, dass derartige unsichere Lagen bei Rückschaltung vorkommen, die nur mit äusserem Eingriff /mit der I, II und III Position des Kontrollers/ beseitigt werden können. Auf diese Weise können diese Positionen auch weggelassen werden. Aus einem einzigen Grund lohnt es sich, diese Verbotspositionen doch beizubehalten, und zwar: im Falle von bestimmten Betriebsstörungen der Steuerung des automatischen Wechselgetriebes bleibt das Kraftfahrzeug mit der Verwendung dieser Verbotspositionen mit Handsteuerung noch dermassen betriebsfähig, dass es in die Garage oder Reparaturwerkstätte geführt werden kann.

Eine weitere Information ist durch einen Gaspedalstellungssignalgeber 11 erzeugt, der am das Kraftstoffzufuhrsystem des Motors 1 regelnden Gaspedals 10 eingebaut ist. Die ganze Winkelverdrehung des Gaspedals 10 beträgt 23°, und der Gaspedalstellungsignalgeber 11 er zeugt fortlaufend im ganzen Winkelbereich 0 bis 23° ein mit der Verdrehung proportionales elektrisches Signal. Auch der Gaspedalstellungsignalgeber 11 ist an einem Eingang der elektronischen Steuereinheit 13 angeschlossen.

Schliesslich ist auch die Drehzahl des Motors 1 eine für die Steuerung nötige Information. Das die Drehzahl der Kurbelwelle des Motors 1 ausdrückende Drehzahlsignal $\underline{nm}$, das zur Steuerung geeignet ist, wird derweise erzeugt, dass an der Nockenwelle des Motors 1 ein Drehzahlsignalgeber 12 eingebaut und am Eingang der elektronischen Steuereinheit 13 eingeschlossen ist. Die Transmission 1:2 der Nockenwelle und der Kurbelwelle ist in der elektronischen Einheit 13 unmittelbar nach dem Eingang berücksichtigt.

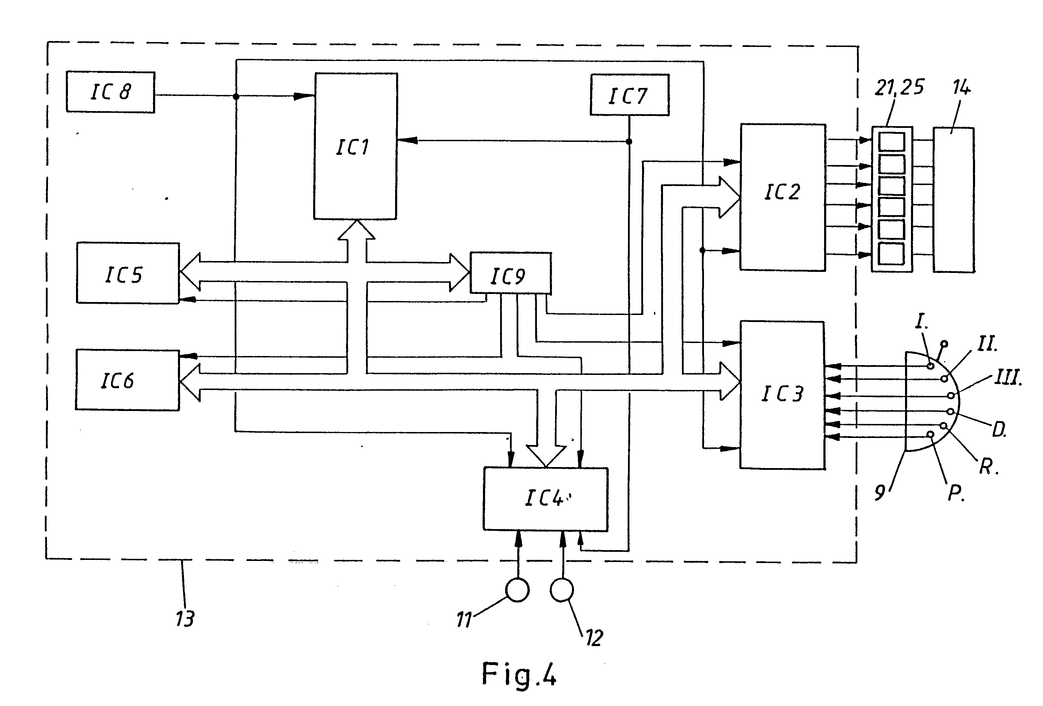

Die elektronische Einheit 13 kann in Kenntnis der Verfahrensschritte in zahlreichen Varianten aufgebaut werden. Eine mögliche Variante ist in Fig. 4 dargestellt. Die elektronischen Elemente sind mit den bekannten Typennummern aus den IC-Katalogen identifiziert.

Die in Fig. 4 dargestellte elektronische Steuereinheit 13 besteht aus dem Mikroprozessor Z 80 A IC1, der programmierbaren Input-Output-Einheit P10 8255 IC2 und IC3, der programmierbaren Dreikanal-Zähler- und -zeitreglereinheit IC4 /8252/, der RAM-Einheit IC5 /4016/, der ROM-Einheit IC6 /2732/, dem Taktgenerator IC7 /7434/ der Reset-Einheit IC8 /74 LS 132/ und der Dekoder-Einheit IC9 /74 LS 138/.

Die Adressen-, Daten- und Steuerungsanschlusspunkte gleicher Funktion des Mikroprozessors IC1, der programmierbaren Input-Output-Einheit IC2 und IC3, der programmierba ren Dreikanal-Zähler- und -zeitreglereinheit IC4, der RAM-Einheit IC5, der ROM-Einheit IC6 und der Dekoder-Einheit IC9 sind miteinander verbunden.

Die Reset-Einheit IC8 ist mit dem Reset-Punkt des Mikroprocessors IC1, der programmierbaren Input-Output-Einheit IC2 und IC3, der programmierbaren Dreikanal-Zähler- und -zeitreglereinheit IC4 verbunden.

Die Ausgänge der Dekoder-Einheit IC9 sind einzelweise mit den chip-select Eingängen der programmierbaren Input-Output-Einheit IC2 und IC3, der programmierbaren Dreikanal-Zähler- und -zeitreglereinheit IC4, der RAM-Einheit IC5 und der ROM-Einheit IC6 verbunden.

Der Taktgenerator IC7 ist mit dem Takteingang des Mikroprozessors IC1 und der programmierbaren Dreikanal-Zähler-und -zeitreglereinheit IC4 verbunden.

Die elektronische Steuereinheit 13 ist mit den in der Steuerung teilnehmenden Elementen wie folgt in Verbindung.

Die von den Ausgängen des Kontrollers 9 ankommenden Signale werden von den Eingängen der programmierbaren Input-Output-Einheit IC3, das Signal des Gaspedalstellungsignalgebers 11 und das Signal des Drehzahlsignalgebers 12 erden von den Eingängen der programmierbaren Dreikanal-Zähler- und -zeitreglereinheit IC4 empfangen.

Das Steuersignal der elektronischen Steuereinheit 13 erscheint an den Ausgängen der programmierbaren Input-Output-Einheit IC2. Diese Ausgänge sind mittels Leistungsverstärker 21 und 25 am elektrischen Eingang der elektromagnetischen Ventile 14 angeschlossen. Die Leistungsverstärker 21 und 25 bilden keinen Teil der elektronischen Steuereinheit 13, ihr Aufbau gehört zur Fachkenntnis eines Fachmannes.

Es soll schon jetzt vorausgeschickt werden, dass in der Schaltungsanordnung in Fig. 4 diejenigen funktionellen Einheite, auf die im weiteren bei der Bekanntmachung der Verfahrensvariante und in den diesen darstellenden Blockschemen hingewiesen wird, nicht genau zu erkennen sind. Dessen Grund liegt darin, dass die Steuerungselektronik mit, den Operationen entsprechend spezialisierten elektronischen Elementen auf einfachere Weise aufgebaut werden kann. Es ist zum Beispiel offenbar, dass eine Memorieneinheit hoher Kapazität allein fähig ist diejenigen Informationen zu speichern, zu denen wir im Blockschema zwecks leichteren Verständnis gesonderte Memorieneinheite zugeordnet haben.

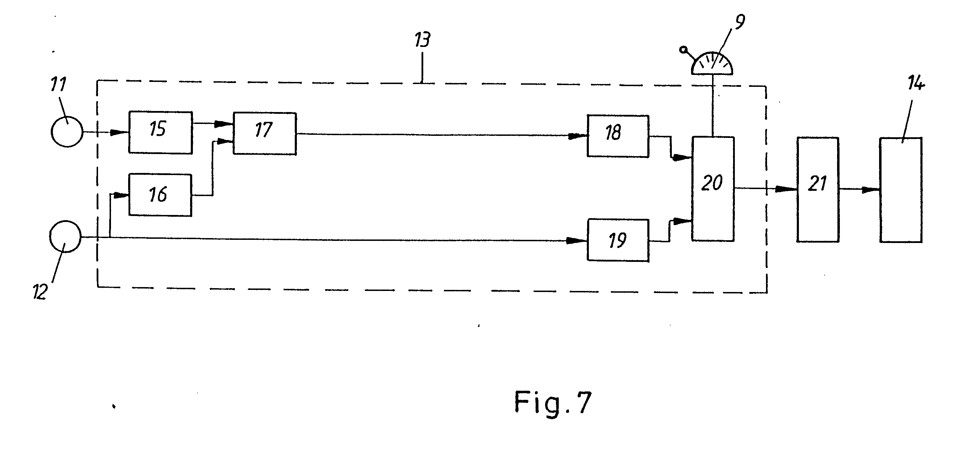

Das erfindungsgemässe Verfahren wird laut dem Blockschema nach Fig. 7 wie folgt durchgeführt.

In die Memorieneinheit 15 wird das die Funktion der Gaspedalstellung und des Moments ausdrückende Diagramm M /$\phi$/, welches in Fig. 2 dargestellt, und in die Memorieneinheit 16 wird das die Funktion der Drehzahl und des Moments ausdrückende Diagramm M /n/, welches in Fig. 3 dargestellt ist, eingeführt.

Im allgemeinen Fall erfolgt die Stufenschaltung wie folgt.

Wenn der Fahrzeugfahrer starten will, schaltet er den Kontroller 9, der bisher in Leerposition N war, in Stellung D. Wenn die Bedingungen des sicherheitsvollen Anlassens des Autobusses erfüllt worden sind, erhöht der Fahr zeugfahrer die Drehzahl des Motors 1 mittels Eindrücken des Gaspedals 10, und die die Stufenschaltung steuernde Einheit 20 gibt den elektromagnetischen Ventilen 14 durch den Leistungsverstärker 21 ein Befehlsignal zur Einschaltung der Gangstufe I. So startet der Autobus in der Gangstufe I.

Von nun an liefert der Gaspedalstellungsignalgeber 11 fortlaufend Gassignal zur Memorieneinheit 15 und der Drehzahlsignalgeber 12 fortlaufend Drehzahlsignal zur Memorieneinheit 16. Die Memorieneinheit 15 wählt aus dem gespeicherten Diagramm M / / die zur jeweiligen Gaspedalstellung gehörenden theoretischen Momentwerte fortlaufend aus. Auf ähnliche Weise wählt auch die Memorieneinheit 16 aus dem gespeicherten Diagramm M /n/ die zur jeweiligen Drehzahl gehörenden Momentwerte fortlaufend aus. Aus der Vergleichung dieser zwei Momentwerte kann auf die Belastung des Motors 1 gefolgt werden.

Das erfolgt in der das Belastungssignal erzeugenden Einheit 17, in der das Signal sowohl der Memorieneinheit 15, als auch der Memorieneinheit 16 eingespeist wird. Hier wird mit der Formel

$$s = \frac{\int M /\varphi/ \, d\varphi - \int M /n/ \, dn}{\int M /\varphi/ \, d\varphi} \cdot 100 \%$$

ein in Prozentsatz ausgedrücktes Belastungssignal s erzeugt. Das Belastungssignal s verändert sich mit der Veränderung der Gaspedalstellung und der Drehzahl sinngemäss fortlaufend.

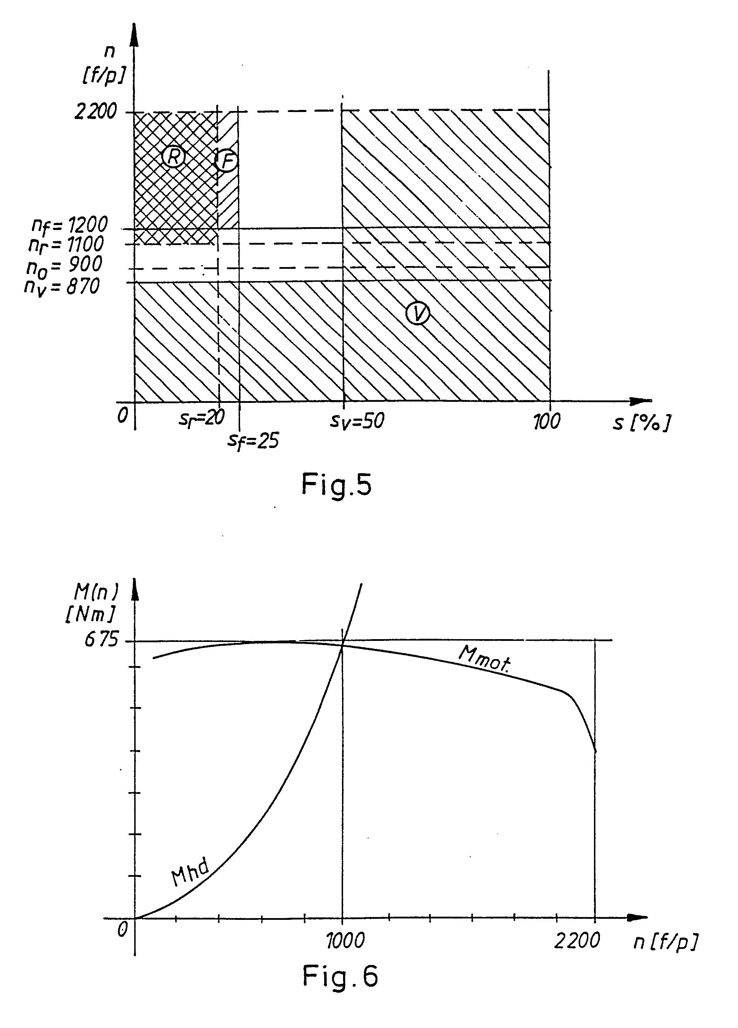

Das Belastungssignal s wird aus der das Belastungssignal erzeugenden Einheit 17 in die die Belastung bewertende Einheit 18 geführt. Auf dieselbe Weise wird das Signal des Drehzahlsignalgebers 12 in die die Drehzahl bewertende Einheit 19 geführt. Die Bewertung des Belastungssignals s und des Drehzahlsignals nm kann aufgrund der Fig. 5 verstanden werden. Auf Versuchsweg wurden derjenige Belastungswert und Drehzahlwert bestimmt, neben derer gemeinsamen Erfüllung der Motor 1 den Autobus in einer um einer Stufe höheren Gangstufe ohne Verminderung der Geschwindigkeit des Autobusses bewegen könnte. Auf ähnliche Weise wurden derjenige Belastungswert und Drehzahlwert bestimmt, bei der Erreichung jedwelchen dieser Werte in eine um einer Stufe niedrigere Gangstufe zurückgeschaltet werden soll, denn andernfalls würde der Autobus unbegründet verlangsamen, bzw. der Motor 1 abwürgen.

Aus Fig. 5 ist ersichtlich, dass das Wechselgetriebe in die nächste höhere Gangstufe geschaltet werden soll, wenn

sich der jeweilige Belastungswert unter einen konstanten Vergleichungs-Aufschaltungs-Belastungswert sf vermindert, wo sf = 25 % ist

und

sich die jeweilige Motordrehzahl über einen konstanten Vergleichungs-Aufschaltungs-Drehzahlwert nf erhöht, wo nf = 1200 U/Min ist.

Aus Fig. 5 ist ersichtlich, dass die Aufschaltung in einem Aufschaltungsbereich "F" zustandekommen kann.

Die Bedingungen der Rückschaltung ist, dass entweder

sich der jeweilige Belastungswert über einen konstanten Vergleichungs-Rückschaltungs-Belastungswert sv erhöht, wo sv = 50 % ist

oder

sich die jeweilige Motordrehzahl unter einen konstanten Vergleichungs-Rückschaltungswert nv vermindert, wo nv = 870 U/Min ist.

Diese Bedingungen bezeichnen in Fig. 5 einen Rückschaltungsbereich "V".

Die die Belastung bewertende Einheit 18 prüft also, wo sich das tatsächliche Belastungssignal s im Belastungsbereich von 0 % bis theoretisch 100 % befindet, und wenn es sich unter das den Vergleichungs-Aufschaltungs-Belastungswert sf ausdrückende Signal vermindert, wird ein die Notwendigkeit zur Aufschaltung ausdrückendes Signal, wenn es sich aber über das den Vergleichungs-Rückschaltungs-Belastungswert sv ausdrückende Signal erhöht, wird ein die Notwendigkeit zur Rückschaltung ausdrückendes Signal erzeugt, das in die die Stufenschaltung steuernde Einheit 20 geführt wird.

Auf ähnliche Weise erfolgt die Bewertung des Drehzahlsignals nm in der die Drehzahl bewertenden Einheit 19, die also prüft, wo sich die jeweilige Drehzahl im Drehzahlbereich von 0 bis 2200 U/Min befindet. Wenn die tatsächliche Drehzahl oberhalb des Vergleichungs-Aufschaltungs-Drehzahlwertes nf ist, wird ein die Notwendigkeit zur Aufschaltung ausdrückendes Signal erzeugt, wenn aber die tatsächliche Drehzahl unterhalb des Vergleichungs- Rückschaltungs-Drehzahlwertes ist, wird ein die Notwendigkeit zur Rückschaltung ausdrückendes Signal erzeugt, das in die die Stufenschaltung steuernde Einheit 20 geführt wird.

Zurückkommend auf den Autobus: wenn der Belastungswert s und die tatsächliche Drehzahl in den Aufschaltungsbereich "F" laut Fig. 5 gelangen, gibt die die Stufenschaltung steuernde Einheit 20 durch den Leistungsverstärker 21 den elektromagnetischen Ventilen 14 ein Befehlsignal zur Ausschaltung der Gangstufe I und zur Einschaltung der Gangstufe II.

Während der Stufenschaltung ist die Reibkupplung 3 aus einem später zu beschreibenden Grund in der Mehrzahl der Fälle in geschlossenem Zustand. So taucht auch hier das Problem der erwähnten Asynchronität auf. Dessen Lösung ist kein Gegenstand der Erfindung, deshalb beschäftigen wir uns damit nicht ausführlich. Kurz soll man darüber wissen, dass die Hydraulik anhand ihrer Eigenschaft eine Betriebsverzögerung gewährleistet, die noch dadurch befördert wird, dass auch in der Elektronik ein, eine Verzögerung von 50 msec sicherndes Element eingebaut ist. Auf diese Weise ist im wesentlichen auch das eine überlappende Schaltung.

Die die Stufenschaltung steuernde Einheit 20 gibt auf die dem vorangehenden ähnliche Weise ein Befehlsignal zur Schaltung der Gangstufen III und IV, wenn der Belastungswert s und die tatsächliche Drehzahl dem Beschleunigungswillen des Fahrzeugfahrers ensprechend wieder in den Aufschaltungsbereich "F" nach Fig. 5 gelangen.

Es ist ohne besondere Erklärung einzusehen, dass der die Stufenschaltung steuernden Einheit 20 in der Wahl der richtigen Gangstufe eine interne Memorie behilflich ist, die das Identifikationssignal der jeweiligen eingeschalteten Gangstufe speichert. Dadurch ist gesichert, dass die die Stufenschaltung steuernde Einheit neben der Bewertung der Notwendigkeit zur Aufschaltung oder zur Rückschaltung auch das entscheiden kann, welche Gangstufe eingeschaltet werden soll. Die die Stufenschaltung steuernde Einheit 20 soll darüber hinaus noch eine Fähigkeit haben, nämlich, dass wenn das Wechselgetriebe 2 während der Fahrt eventuell in Leerlauf geschaltet wird und immer noch während der Fahrt wieder jedwelche Gangstufe eingeschaltet werden soll, soll die die Stufenschaltung steuernde Einheit 20 entscheiden, welche Gangstufe der tatsächlichen Geschwindigkeit des Kraftfahrzeuges am meisten entspricht. Diese Teillösungen sind ebenfalls kein Gegenstand der Erfindung, deshalb werden wir diese nicht ausführlich beschreiben. Schliesslich gehört hierz noch, dass obwohl die Kenntnis der tatsächlichen Geschwidigkeit des Kraftfahrzeuges zur erfindungsgemässen Steuerung nicht unbedingt nötig ist, kann die letzterwähnte Aufgabe der die Stufenschaltung steuernden Einheit 20 auf keine andere Weise durchgeführt werden, aus diesem Grund ist das Wechselgetriebe 2 mit einem Drehzahlsignal geber 34 versehen, der bei der Bekanntmachung einer and ren Variante ausführlicher beschrieben wird.

Im Zusammenklang mit der Stufenschaltung soll für da Schliessen-Auflösen der Reibkupplung 3 gesorgt werden. Zur Bestimmung der hier verwendeten Bedingungen ist vorangehend eine Erklärung nötig.

Wie bekannt, ist die Momentübertragungsfähigkeit des hydrodynamischen Momentwandlers 4 vom an der Kurbelwelle des Motors 1 erweckenden Moment abweichend. Ungefähr 1000 U/Min ist diejenige Drehzahl, bei der die zwei Momente gleich sind; bei geringerer Drehzahl ist die Momentübertragungsfähigkeit des hydrodynamischen Momentwandlers 4 geringer, bei höherer Drehzahl ist sie grösser als das an der Kurbelwelle des Motors 1 messbare Moment. Das Momentdiagramm M /n/ des unserseits verwendeten hydrodynamischen Momentwandlers wurde nicht aufgenommen, so ist in Fig. 6 nur das Verhältnis des Momentdiagramms M /n/ des Motors 1 und des hydrodynamischen Momentwandlers 4 dargestellt. Mmot ist das Diagramm des Motors 1, Mhd ist das Diagramm des hydrodynamischen Momentwandlers 4. Wenn also unter 1000 U/Min die Reibkupplung 4 nicht kurzgeschlossen ist, hat der hydrodynamische Momentwandler 4 ein Slip und wird sich nicht auf die Drehzahl des Motors 1 vermindern, so kann der Motor 1 den Autobus in derselben Gangstufe weiter treiben. Es ist offenbar, dass bei einer höheren Drehzahl auch das am hydrodynamischen Momentwandler 4 erweckende geringste Slip ein überflüssiger Verlust ist, deshalb ist es zweckmässig, die Reibkupplung 3 kurzzuschliessen.

Die Bedingungen des Betriebs der Reibkupplung 3 sind auf die in Fig. 5 dargestellte Weise wie folgt bestimmt.

Die Reibkupplung 3 schliesst kurz, wenn

die jeweilige Drehzahl über einen konstanten Vergleichungs-Kurzschluss-Drehzahlwert nr gelangt, wo nr = 1100 U/Min ist,

und

der jeweilige Belastungswert sich unter einen konstanten Vergleichungs-Kurzschluss-Belastungswert sr vermindert, wo sr = 20 % ist

und löst auf, wenn

sich die jeweilige Drehzahl unter einen konstanten Vergleichungs-Auflösungs-Drehzahlwert no vermindert, wo no = 900 U/Min ist.

Es ist sichtbar, dass die Drehzahlwerte nicht in, den Schnittpunkten der Momentkurven entsprechendem Wert von 1000 U/Min angegeben sind, denn auf diese Weise ist die Betätigung der Reibkupplung 3 bestimmter.

Zur Durchführung der oben beschriebenen, d.h. zur Steuerung des Auflösens-Schliessens der Reibkupplung 3 wird das Belastungssignal der das Belastungssignal erzeugenden Einheit 17 in eine die Belastung bewertende Einheit 22, und das Drehzahlsignal nm des Drehzahlsignalgebers 12 in eine die Drehzahl bewertende Einheit 23 geführt, wo dieses mit dem Vergleichungs-Kurzschluss-Belastungswert sr, beziehungsweise mit dem Vergleichungs-Kurzschluss-Drehzahlwert nr und dem Vergleichungs-Auflösungs-Drehzahlwert no verglichen wird. Wenn sich der Belastungswert s unter den Vergleichungs-Kurzschluss-Belastungswert sr vermindert und die Drehzahl sich über den Vergleichungs-Kurzschluss- Drehzahlwert nr erhöht, geben die die Belastung bewertende Einheit 22 und die die Drehzahl bewertende Einheit 23 der das Schliessen der Reibkupplung steuernden Einheit 24 ein die Notwendigkeit zum Kurzschliessen der Reibkupplung 3 ausdrückendes Signal, und die das Schliessen der Reibkupplung steuernde Einheit 24 gibt durch den Leistungsverstärker 25 ein Befehlsignal zum Kurzschliessen demjenigen elektromagnetischen Ventil 14, das die Reibkupplung 3 betätigt. Die Reibkupplung 3 schliesst kurz, das heisst bringt zwischen der Kurbelwelle des Motors 1 und der Eintriebswelle des Stufenteils des Wechselgetriebes 2 eine mechanische Verbindung zustande.

Aus Fig. 5 ist ersichtlich, dass der Vergleichungs-Kurzschluss-Belastungswert sr strenger ist als der Vergleichungs-Aufschaltungs-Belastungswert sf, dagegen der Vergleichungs-Kurzschluss-Drehzahlwert nr milder ist als der Vergleichungs-Aufschaltungs-Drehzahlwert nf. Dadurch wurde erreicht, dass solange die Belastung des Motors 1 intensiver ist, das heisst der hydrodynamische Momentwandler 4 nötig ist, weil z.B. der Fahrzeugfahrer die Geschwindigkeit des Kraftfahrzeuges erhöhen will, wird die Aufschaltung in eine höhere Gangstufe eher erfolgen, wenn aber die Belastung günstiger ist, wird erst das Kurzschliessen der Reibkupplung erfolgen.

Zur Rückschaltung des Wechselgetriebes können - wie bekannt - drei Gründe bestehen, und zwar der Fahrzeugfahrer verlangsamt das Kraftfahrzeug, oder beschleunigt stark /bei Vorfahrt/ oder der Autobus fährt in Aufwärtsgang.

Der einfachste Fall ist, wenn der Fahrzeugfahrer das Kraftfahrzeug verlangsamt. Hier lässt er das Gaspedal 10 in Grundstellung zurück, wonach die Drehzahl des Motors 1 abnimmt. Wenn die Drehzahl unter den Vergleichungs-Auflösungs-Drehzahlwert no gelangt, gibt die die Drehzahl bewertende Einheit 23 der das Schliessen der Kupplung steuernden Einheit 24 ein die Notwendigkeit zum Auflösen der Reibkupplung 3 ausdrückendes Signal, und die das Schliessen der Kupplung steuernde Einheit 24 gibt demjenigen elektromagnetischen Ventil 14, das die Reibkupplung 3 betätigt, durch den Leistungsverstärker 25 ein Befehlsignal zum Auflösen. Die Reibkupplung 3 löst auf und die Momentübertragung erfolgt danach durch den hydrodynamischen Momentwandler 4.

Wenn die Drehzahl des Motors 1 weiter abnimmt und unter den Vergleichungs-Rückschaltungs-Drehzahlwert nv gelangt, erzeugt die die Drehzahl bewertende Einheit 19 ein die Notwendigkeit zur Rückschaltung ausdrückendes Signal, wonach die die Stufenschaltung steuernde Einheit 20 durch den Leistungsverstärker 21 den elektromagnetischen Ventilen 14 ein Befehlsignal zur Ausschaltung der Gangstufe IV und zur Einschaltung der Gangstufe III gibt.

Wenn der Fahrzeugfahrer das Kraftfahrzeug weiter verlangsamt, gibt die die Stufenschaltung steuernde Einheit 20 auf der Verminderung der Drehzahl des Motors 1 ähnliche Weise ein Befehlsignal zur Rückschaltung in je niedrigere Gangstufen.

Bei der kraftvollen Beschleunigung und bei dem Aufwärtsgang ist die Lage unterschiedlich. Hier kann eine unsichere Schaltungslage entstehen, die bisher einfach mit der in einem oder zwei Schritten vorgenommenen bestimmten Verstrengung der Aufschaltungsbedingungen beseitigt wurde. Bei dem erfindungsgemässen Verfahren sind -mittels Prüfung des Belastungszustandes vor der Zurückschaltung in eine niedrigere Gangstufe - die Aufschaltungsbedingungen stufenlos, nur im nötigen Mass strenger gemacht.

Zur Durchführung des Verfahrens sollen erst die Art und das Mass der Verstrengung bestimmt werden. Dazu wurde auf Versuchsweg festgestellt, dass der Vergleichungs-Aufschaltungs-Belastungswert sf maximum bis 6 % strenger gemacht werden soll, das heisst der korrigierte Vergleichungs-Aufschaltungs-Belastungswert sfk soll sich zwischen 25 % und 6 % befinden.

Das Mass der Verstrengung soll vom Mass der Belastung vor der Zurückschaltung abhängig gewählt werden. Da das Drehzahlsignal eines der Grunddaten des Belastungswertes ist, ist es genügend zu prüfen, wie hoch die Drehzahl des Motors 1 im Moment der Zurückschaltung war, bzw. wo sie sich im Betriebsdrehzahlbereich befindete. Der Betriebsdrehzahlbereich beträgt bei dem unserseits verwendeten Motor 880-180C U/Min. Bei der ersten Annäherung wurde zwischen der Anordnung der Drehzahl im Betriebsdrehzahl bereich vor der Zurückschaltung und der Verstrengung der Aufschaltungsbedingung ein linearer Zusammenhang angenommen. Aufgrund der Versuche war es nicht nötig, das zu modifizieren. Doch ist es zweckmässig, den richtigen Zusammenhang auf Versuchsweg festzustellen.

Im Falle des linearen Zusammenhangs erfolgt die Korrektion mit Hilfe der folgenden Formeln:

$$k = \frac{n_{zurück} - n_{ümin}}{n_{ümax} - n_{ümin}}$$

wobei k - der Korrektionsfaktor,
$n_{zurück}$ - die Drehzahl vor der Zurückschaltung,
$n_{ümin}$ - die geringste Betriebsdrehzahl /880 U/Min/,
$n_{ümax}$ - die höchste Betriebsdrehzahl /1800 U/Min/
ist.

Damit ist
sk = k . /sf - sfmin/
wobei sk - der Korrektionswert,
k - der obenerwähnte Korrektionsfaktor,
sf - der normale Vergleichungs-Aufschaltungs-Belastungswert /25 %/,
sfmin - der strengste Vergleichungs-Aufschaltungs-Belastungswert /6 %/ ist.

Schliesslich
sfk = sf - sk
srk = sr - sk
wobei sfk - der korrigierte Vergleichungs-Aufschaltungs-Belastungswert,
srk - der korrigierte Vergleichungs-Kurzschluss-Belastungswert ist.

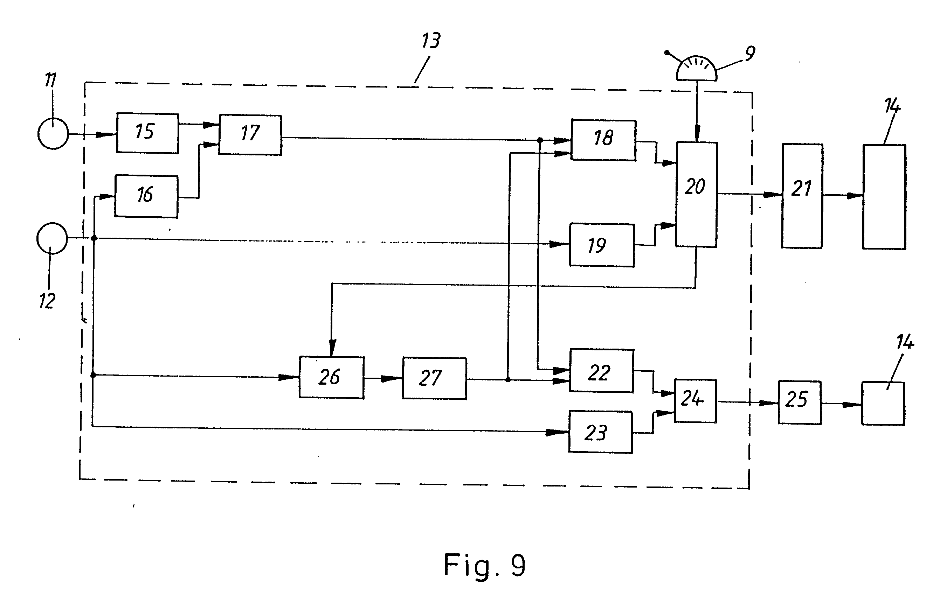

In Kenntnis der obigen ist das Verfahren mit Hilfe der Fig. 9 leicht zu verstehen.

Das Drehzahlsignal des Drehzahlsignalgebers 12 wird in die Memorieneinheit 26 fortlaufend eingespeist.

Wenn der Fahrzeugfahrer vorzufahren beginnt, drückt er das Gaspedal 10 kraftvoll nieder. Zur veränderten Gaspedalstellung gehört aus der Funktion M /ϕ/ ein höherer Wert, deshalb erhöht sich das durch die das Belastungssignal erzeugende Einheit 17 erzeugte Belastungssignal s und wenn es den Wert sv erreicht, gibt die die Stufenschaltung steuernde Einheit 20 auf die bereits beschriebene Weise den elektromagnetischen Ventilen 14 ein Befehlsignal zur Schaltung in eine um eine Stufe niedrigere Gangstufe.

Gleichzeitig damit gibt die die Stufenschaltung steuernde Einheit 20 der Memorieneinheit 26 ein Befehlsignal zur Speicherung des gerade angekommenen Drehzahlsignals. Aus diesem Drehzahlsignal wird in der das Vergleichungs-Belastungssignal erzeugenden Einheit 27 den oben bekanntgemachten Formeln entsprechend der Korrektionswert sk erzeugt und in die die Belastung bewertende Einheit 18, weiterhin in die die Belastung bewertende Einheit 22 geführt.

Von nun an wird die die Belastung bewertende Einheit 18 das aus der das Belastungssignal erzeugenden Einheit 17 ankommende Belastungssignal mit demjenigen Signal vergleichen, das den um dem Korrektionswert sk modifizierten korrigierten Vergleichungs-Aufschaltungs-Belastungswert sfk ausdrückt, und wird der die Stufenschaltung steuernden Einheit 20 die Notwendigkeit zur Aufschaltung in eine höhere Gangstufe nur im Falle der Erfüllung dieser strengeren Bedingung anzeigen.

Auf ähnliche Weise wird die die Belastung bewertende Einheit 22 der die Kupplungschliessung steuernden Einheit 24 die Notwendigkeit zum Kurzschliessen der Reibkupplung 3 nur anzeigen, wenn das Belastungssignal geringer ist als das den um dem Korrektionswert sk modifizierten korrigierten Vergleichungs-Kurzschluss-Belastungswert srk ausdrückende Signal.

Bei Beendigung der Vorfahrt oder der Beschleunigung "überholt" die Drehzahl des Motors 1 die Gaspedalstellung, das Belastungssignal s nimmt ab,und wenn es sich unter den korrigierten Vergleichungs-Aufschaltungs-Belastungswert sfk vermindert, wird die die Belastung bewertende Einheit 18 der die Stufenschaltung steuernden Einheit die Notwendigkeit zur Aufschaltung in eine höhere Gangstufe anzeigen.

Die die Stufenschaltung steuernde Einheit 20 löscht mit ihrem Befehlsignal den Korrektionswert sk und die Grundbedingungen der Gangstufen und des Kurzschliessens der Reibkupplung 3 stellen sich zurück.

Im wesentlichen verläuft derselbe Vorgang, wenn der Autobus auf einer Steigung fährt. Hier wird sich das Belastungssignal s nicht davon verändern, dass der Fahrzeugfahrer das Gaspedal niederdrückt, sondern davon, dass die Drehzahl des Motors 1 abnimmt, die Memorieneinheit 16 aus dem Diagramm M /n/ ein niedrigeres Moment auswählt, so wird sich das Belastungssignal s neben unveränderter Gaspedalstellung erhöhen, und wenn es den Vergleichungs-Rückschaltungs-Belastungswert sv erreicht, wird die die Belastung bewertende Einheit 18 der die Stufenschaltung steuernden Einheit 20 die Notwendigkeit zur Zurückschaltung anzeigen, und die die Stufenschaltung steuernde Einheit gibt ein Befehlsignal zur Zurückschaltung in eine niedrigere Gangstufe. Gleichzeitig damit startet der oben bekanntgemachte Vorgang.

Die Veränderung der Bedingung der Gangstufenschaltung ist selbstverständlich nicht nur mit der Veränderung des Vergleichungs-Aufschaltungs-Belastungswertes sf möglich, sondern auch mit der Veränderung des Vergleichungs-Aufschaltungs-Drehzahlwertes nf. Das kann wie folgt erfolgen:

Der Korrektionsfaktor k ist derselbe, wie bisher, damit ist

nk = k . /nfmax - nf/

wobei nk - der Korrektionswert,

nfmax - der strengste Vergleichungs-Aufschaltungs-Drehzahlwert /1700 U/Min/,

nf - der normale Vergleichungs-Aufschaltungs-Drehzahlwert /1000 U/Min/ ist,

schliesslich

nfk = nf + nk

nrk = nr + nk

wobei nfk - der korrigierte Vergleichungs-Aufschaltungs-Drehzahlwert,

nrk - der korrigierte Vergleichungs-Kurzschluss-Drehzahlwert ist.

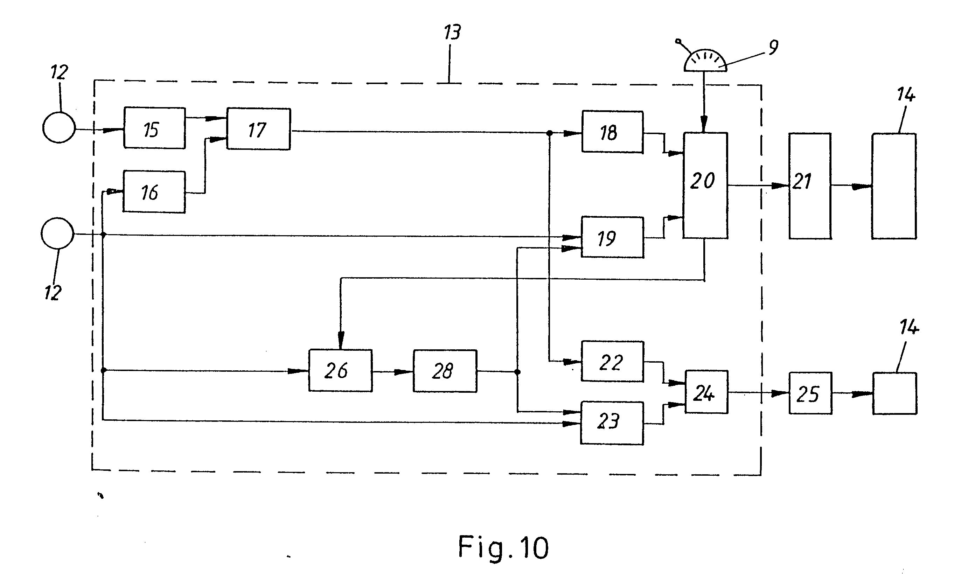

Diese Verfahrensvariante kann aufgrund des Blockschemas in Fig. 10 leicht verstanden werden. Es ist zu sehen, dass mit dem Befehlsignal der die Stufenschaltung steuernden Einheit 20, mit der Verwendung des in der Memorieneinheit 26 gespeicherten Drehzahlsignals die das Vergleichungs-Drehzahlsignal erzeugende Einheit 28 den Korrektionswert nk bestimmt und in die die Drehzahl bewertende Einheit 19 und in die die Drehzahl bewertende Einheit 23 weiterführt. Von nun an verläuft der Vorgang auf mit dem oben ausführlich beschriebenen analoge Weise, deshalb ist dessen Erläuterung hier nicht notwendig.

Bei der Verstrengung der Aufschaltungsbedingungen wurde gemeint, dass die Beseitigung der unsicheren Aufschaltungslagen desto wahrscheinlicher ist, je kraftvoller die Verstrengung ist. Es kann aber vorkommen, dass diese übermässig, also nicht erfüllbar ist. Hier kann auch der Fahrzeugfahrer selbst dadurch helfen, dass er mit einer kurzen Gaszufuhrabnahme einen Schubbetrieb zustandebringt, wobei das Belastungssignal s sicher unter 6 % fällt. Das System kann auch mit einem derartigen Hilfsprogramm versehen werden, dass wenn die Drehzahl des Motors 1 sich über 2050 U/Min erhöht, die Verstrengung der Aufschaltungsbedingungen automatisch erlischt.

Es können auch einfachere Varianten der erfindungsgemässen Verfahrens verwirklicht werden.

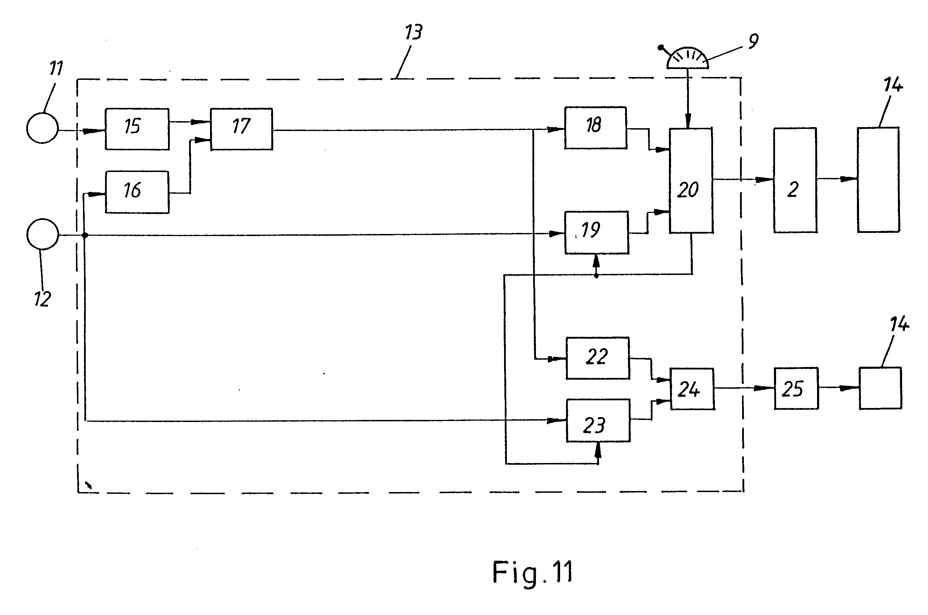

Das Blockschema in Fig. 11 zeigt eine der einfachsten Varianten. Hier erfolgt die Schaltung der Gangstufen unter normalen Umständen auf dieselbe Weise, wie bei den bisher beschriebenen Verfahrensvarianten. Die Memorieneinheit 15 wählt aus dem Diagramm M /$\phi$/ den zum Gassignal des Gaspedalstellungsignalgebers 11 gehörenden Momentwert, und die Memorieneinheit 16 wählt aus dem Diagramm M /n/ den zum Drehzahlsignal des Drehzahlsignalgebers 12 gehörenden Momentwert fortlaufend aus. Die das Belastungssignal erzeugende Einheit 17 erzeugt aus den Momentwerten das Belastungssignal s, und das wird durch die die Belastung bewertende Einheit 18, und das Drehzahlsignal wird durch die die Drehzahl bewertende Einheit 19 aus dem Gesichtspunkt der Bedingung der Gangstufenschaltung geprüft und die die Stufenschaltung steuernde Einheit 20 wird über die Notwendigkeit zur Aufschaltung oder Zurückschaltung signalisiert, wonach die die Stufenschaltung steuernde Einheit 20 durch den Leistungsverstärkern 21 den elektromagnetischen Ventilen 14 das entsprechende Befehlsignal weiterleitet.

Die Vereinfachung im Vergleich zu den früher bekanntgemachten Verfahrensvarianten besteht in der Art der Verstrengung der Aufschaltungsbedingungen. In der die Drehzahl bewertenden Einheit 19 ist über den normalen Vergleichungs-Aufschaltungs-Drehzahlwert nf hinaus auch ein verstrengter Vergleichungs-Aufschaltungs-Drehzahlwert nfs programmiert. Auf ähnliche Weise ist auch in der die Drehzahl bewertenden Einheit 23 über den normalen Vergleichungs-Kurzschluss-Drehzahlwert nr hinaus ein verstrengter Vergleichungs-Kurzschluss-Drehzahlwert nrs eingespeist.

Wenn die die Stufenschaltung steuernde Einheit 20 durch den Leistungsverstärkern 21 den elektromagnetischen Ventilen 14 ein Befehlsignal zur Zurückschaltung in eine niedrigere Gangstufe weiterleitet, gibt sie mit dem Befehlsignal zur Zurückschaltung der die Drehzahl bewertenden Einheit 19, dass diese im weiteren das Drehzahlsignal des Drehzahlsignalgebers 12 im Vergleich zum verstrengten Vergleichungs-Aufschaltungs-Drehzahlwert nfs prüfen soll. Auf dieselbe Weise erhält auch die die Drehzahl bewertende Einheit 23 ein Befehlsignal von der die Stufenschaltung steuernden Einheit 20, dass im weiteren die Bedingung zum Kurzschliessen der Reibkupplung 3 der verstrengte Vergleichungs-Kurzschluss-Drehzahlwert nrs ist.

Dieses strenger machende Befehlsignal der die Stufenschaltung steuernden Einheit 20 wird durch das nächste Befehlsignal zur Aufschaltung gelöscht.

Der verstrengte Vergleichungs-Aufschaltungs-Drehzahlwert nfs und der verstrengte Vergleichungs-Kurzschluss-Drehzahlwert nrs können mit dem, bei den vorangehend bekanntgemachten Verfahrensvarianten bestimmten strengsten Vergleichungs-Aufschaltungs-Drehzahlwert nfmax, beziehungsweise mit dem strengsten Vergleichungs-Kurzschluss-Drehzahlwert nrmax gleich sein.

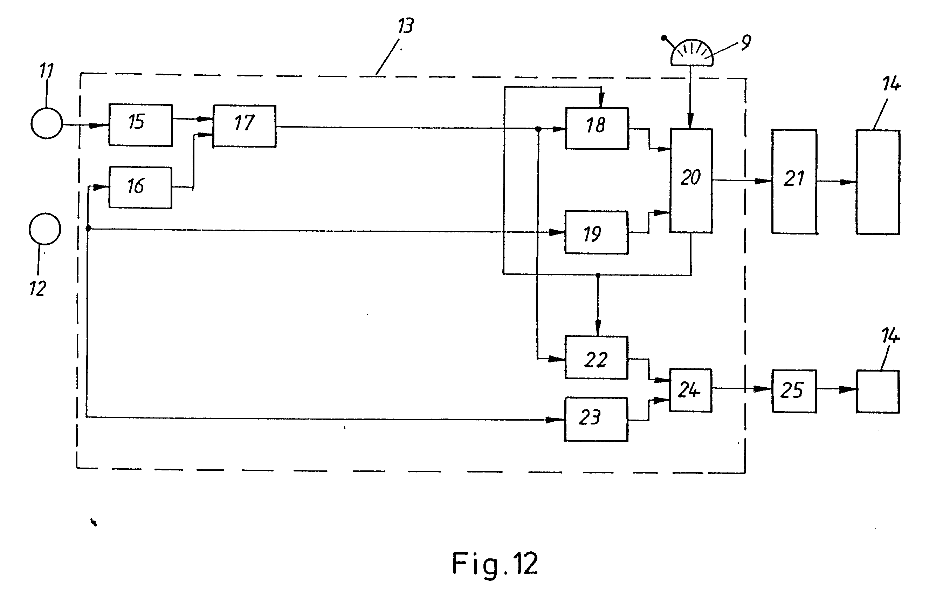

Aus dem Blockschema in Fig. 12 ist es ersichtlich, dass eine ähnlich einfache Verfahrensvariante verwirklicht werden kann, wenn von den Bedingungen der Gangstufenschaltung nicht die Drehzahl, sondern der Belastungswert geprüft wird.

In der die Belastung bewertenden Einheit 18 ist auch ein verstrengter Vergleichungs-Aufschaltungs-Belastungswert sfs, und in der die Belastung bewertenden Einheit 22 ist auch ein verstrengter Vergleichungs-Kurzschluss-Belastungswert srs eingespeist. Diese können mit dem vorangehend bestimmten strengsten Vergleichungs-Aufschaltungs-Belastungswert sfmin, beziehungsweise mit dem strengsten Vergleichungs-Kurzschluss-Belastungswert srmin gleich sein.

Zur Verwendung der verstrengten Bedingungen gibt das Befehlsignal bezüglich Zurückschaltung der die Stufenschaltung steuernden Einheit 20 auf mit dem vorangehenden gleiche Weise Befehl.

Diese zwei vereinfachten Verfahrensvarianten sind gewissermassen den bereits früher verwendeten Lösungen ähnlich. Sie sind doch besser, weil die Grundbedingungen der Stufenschaltung erfindungsgemäss aufgrund der optimalen Belastungs- und Stufenschaltungsdaten geprüft sind.

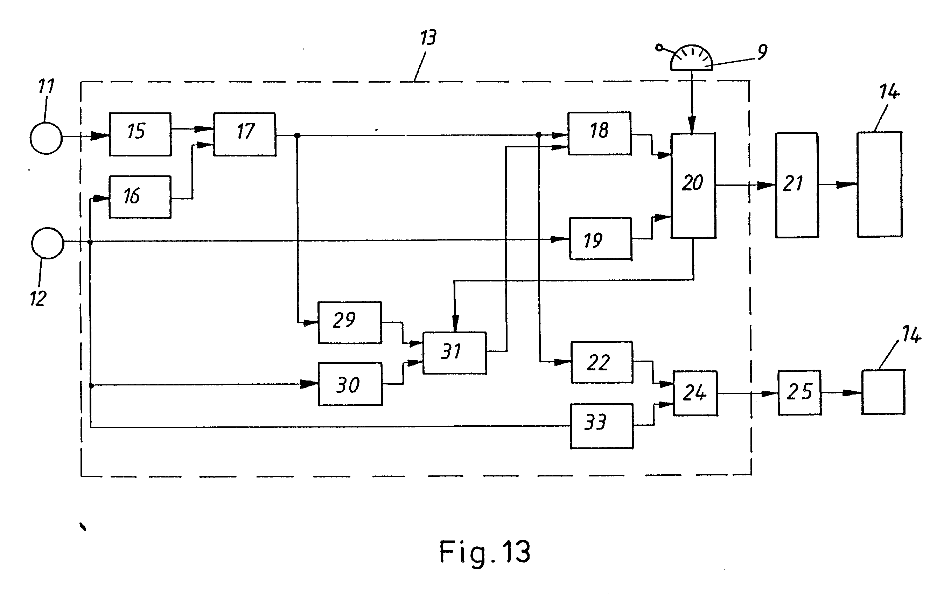

Das Blockschema einer komplizierteren Verfahrensvariante ist in Fig. 13 dargestellt. Die Lösung der normalen Verkehrslagen erfolgt mittels dem bereits bekanntgemachten Verfahren. Die Memorieneinheit 15 sucht die entsprechenden Momentwerte mit dem Gassignal des Gaspedalstellungsignalgebers 11 aus dem Diagramm M /$\phi$/, die Memorieneinheit 16 sucht die entsprechenden Momentwerte mit dem Drehzahlsignal des Drehzahlsignalgebers 12 aus dem Diagramm M /n/, und die das Belastungssignal erzeugende Einheit 17 erzeugt aus den ausgesuchten Momentwerten das Belastungssignal s, welches durch die die Belastung bewertende Ein heit 18 mit dem Vergleichungs-Aufschaltungs-Belastungswert sf und dem Vergleichungs-Rückschaltungs-Belastungswert sv verglichen wird. Die die Drehzahl bewertende Einheit 19 vergleicht das Drehzahlsignal mit dem den Vergleichungs-Aufschaltungs-Drehzahlwert nf und den Vergleichungs-Rückschaltungs-Drehzahlwert nv ausdrückenden Signal. Aufgrund des Ergebnisses der Vergleichung signalisieren die die Belastung bewertende Einheit 18 und die die Drehzahl bewertende Einheit 19 das entsprechende Signal, aufgrund dessen die die Stufenschaltung steuernde Einheit 20 durch den Leistungsverstärker 21 den elektromagnetischen Ventilen 14 ein Befehlsignal zur Einschaltung der entsprechenden Gangstufe gibt.

Auf ähnliche Weise geben die die Belastung bewertende Einheit 22 und die die Drehzahl bewertende Einheit 23 ein Signal der die Kupplungschliessung steuernden Einheit 24. Aufgrund dessen gibt die die Kupplungschliessung steuernde Einheit 24 durch den Leistungsverstärker 25 ein Befehlsignal zum Kurzschliessen oder Auflösung der Reibkupplung.

Bevor die Modifizierung der Bedingungen der Stufenschaltung bekanntgemacht wird, ist es zweckmässig durchzusehen, aus welchen Gründen, wegen welcher Veränderung der Charakteristiken des Betriebszustandes die Zurückschaltung in eine niedrigere Gangstufe erfolgt.

Wie bereits früher beschrieben wurde, kann die Zurückschaltung in drei Lagen erfolgen, und zwar bei normaler Verlangsamung, bei Vorfahrt und bei Aufwärtsfahrt.

Bei normaler Verlangsamung nehmen sowohl das Gassignal als auch die Drehzahl des Motors 1 ab, aber da die Verminderung des Gassignals intensiver ist /es kann sogar auf Zero abnehmen/, vermindert sich auch das Belastungssignal s. Die Zurückschaltung in die niedrigere Gangstufe wird also erfolgen, weil sich die Drehzahl unter den Vergleichungs-Rückschaltungswert nv vermindert. Wenn man die Veränderung der Charakteristiken prüft, kann man sehen, dass aus der Veränderung der Drehzahl ein Drehzahlveränderungssignal vn, aus der Veränderung des Belastungssignals s ein Belastungsänderungssignal vs bildend und die Verminderung der Charakteristiken als negative Veränderung deutend, bei normaler Verlangsamung sowohl das Drehzahlveränderungssignal vn als auch das Belastungsänderungssignal vs negativ werden.

Bei Vorfahrt erhöhen sich sowohl das Gassignal als auch die Drehzahl, aber da sich die Drehzahl langsamer erhöhen kann, erhöht sich das Belastungssignal s. Die Zurückschaltung wird wegen der Erhöhung des Belastungssignals s bei hoher Drehzahl erfolgen. Sowohl das Drehzahlveränderungssignal vn als auch das Belastungsänderungssignal vs werden positiv sein.

Bei Aufwärtsfahrt verändert sich das Gassignal nicht, oder es erhöht sich, die Drehzahl nimmt ab, deshalb wird das Belastungssignal s wider zunehmen. Die Zurückschaltung wird auch hier wegen der Erhöhung des Belastungssignals s erfolgen. Das Drehzahlveränderungssignal vn wird negativ, das Belastungsänderungssignal vs wird positiv sein.

Der Zustand der Charakteristiken vor der Zurückschaltung ist in der untenstehenden Tabelle zusammengefasst.

| Charakteristiken | ihre Veränderung | | |
|---|---|---|---|
| | normale Verlangsamung | Vorfahrt | Aufwärtsfahrt |
| Drehzahl | unter nv | über nv | über nv |
| vn | - | + | - |
| s | nimmt ab | nimmt zu | nimmt zu |
| vs | - | + | - |

Man kann sehen, dass es Charakteristiken gibt, welche in Paaren geprüft eindeutig festgestellt werden kann, was die Zurückschaltung erforderlich machte. Wenn man sich ähnlich zu den bisher verwendeten Lösungen damit befriedigt, dass die Bedingungen der Aufschaltung in ein bis zwei Stufen verstrengt werden, kann die richtige Verstrengung aufgrund der Prüfung der Veränderung der bekanntgemachten Charakteristiken ohne jede weitere Information ausgewählt werden.

Die Verfahrensvariante wird also wie folgt durchgeführt.

Das durch die das Belastungssignal erzeugende Einheit 17 erzeugte Belastungssignal s wird in eine die Belastungsänderung bewertende Einheit 29 geführt, wo aus seiner Veränderung während Zeiteinheit ein Belastungsänderungssignal vs erzeugt wird. Das wird in eine das Vergleichungs-Belastungssignal erzeugende Einheit 31 geführt.

Das Drehzahlsignal des Drehzahlsignalgebers 12 wird in eine die Drehzahlveränderung bewertende Einheit 30 geführt und aus seiner Veränderung während Zeiteinheit wird ein Drehzahlveränderungssignal vn erzeugt. Auch dieses wird in die das Vergleichungs-Belastungssignal erzeugende Einheit 31 geführt.

In der das Vergleichungs-Belastungssignal erzeugenden Einheit 31 wird mit dem Befehlsignal der die Stufenschaltung steuernden Einheit 20 zur Schaltung in niedrigere Gangstufe geprüft, welches Vorzeichen das Drehzahlveränderungssignal vn und das Belastungsänderungssignal vs im Moment der Zurückschaltung hatten.

Wenn sowohl das Drehzahlveränderungssignal vn als auch das Belastungsänderungssignal vs negativ waren, sind der Zurückschaltung eine gleichmässige Fahrt oder eine normale Verlangsamung vorangegangen. In diesem Fall lässt die das Vergleichungs-Belastungssignal erzeugende Einheit 31 die Bedingungen der Aufschaltung der Gangstufe unverändert, das heisst führt eine Korrektionswert vom Wert Zero in die die Belastung bewertende Einheit 18.

Wenn sowohl das Drehzahlveränderungssignal vn als auch das Belastungsänderungssignal vs positiv waren, ist der Zurückschaltung eine kraftvolle Beschleunigung vorangegangen. In diesem Fall verstrengt die das Vergleichungs-Belastungssignal erzeugende Einheit 31 den Vergleichungs-Aufschaltungs-Belastungswert um einen geringeren Korrektionswert, und erzeugt ein den konstanten Vorfahrts-Vergleichungs-Belastungswert ausdrückendes Signal in der die Belastung bewertenden Einheit 18.

Schliesslich wenn das Drehzahlveränderungssignal vn negativ, und das Belastungsänderungssignal vs positiv waren, wurde die Zurückschaltung durch eine Aufwärtsfahrt verursacht. Aus diesem Grund wird die das Vergleichungs-Belastungssignal erzeugende Einheit 31 den Vergleichungs-Aufschaltungs-Belastungswert um einen grösseren Korrektionswert verstrengen, und ein den konstanten Aufwärtsfahrt-Vergleichungs-Belastungswert ausdrückendes Signal in der die Belastung bewertenden Einheit 18 erzeugen.

Zur Durchführung des Verfahrens werden die Bedingungen der Aufschaltung, beziehungsweise deren Verstrengung bei einem Autobus mit den oben angegebenen Daten - auf Versuchsweg - wie folgt bestimmt.

Der normale Vergleichungs-Aufschaltungs-Belastungswert beträgt 25 %, der Vorfahrts-Vergleichungs-Belastungswert 18 %, der Aufwärtsfahrt-Vergleichungs-Belastungswert 6 %. Man kann sehen, dass diese im wesentlichen mit den bei den früher bekanntgemachten Verfahrensvarianten bestimmten Werten gleich sind.

Diese Verfahrensvariante kann auch ohne Prüfung der Belastungsänderung durchgeführt werden. In diesem Fall soll geprüft werden, wie gross das Drehzahlsignal des Drehzahlsignalgebers 12 bei Zurückschaltung in die niedrigere Gangstufe war.

Wenn das Drehzahlsignal unterhalb des Vergleichungs-Rückschaltungs-Drehzahlwertes nv und das Drehzahlveränderungssignal vn negativ war, wird die das Vergleichungs-Belastungssignal erzeugende Einheit 31 das als eine normale Verlangsamung wegen der Verkehrslage bewerten und den in die die Belastung bewertende Einheit 18 eingespeisten Vergleichungs-Aufschaltungs-Belastungswert nicht verändern.

Wenn das Drehzahlsignal höher als vorher und das Drehzahlveränderungssignal vn positiv war, wird die das Vergleichungs-Belastungssignal erzeugende Einheit 31 das als eine kraftvolle Beschleunigung qualifizieren und bestimmt für die die Belastung bewertende Einheit 18 den oben bekanntgemachten Vorfahrts-Vergleichungs-Belastungswert.

Wenn das Drehzahlsignal mit dem obigen gleich hoch und das Drehzahlveränderungssignal vn negativ war, wird die das Vergleichungs-Belastungssignal erzeugende Einheit 31 das als eine Aufwärtsfahrt bewerten und für die die Belastung bewertende Einheit 18 einen Aufwärtsfahrt-Vergleichungs-Belastungswert bestimmen.

Die obigen Verfahrensvarianten können derart weiter vereinfacht werden, dass die normale Verlangsamung wegen der Verkehrslage und die kraftvolle Beschleunigung nicht unterscheidet werden: In diesem Fall soll der Fahrzeugfahrer den Kraftstoff zum "Ausziehen" des Motors 1 für längere Zeit kraftvoll zuführen.

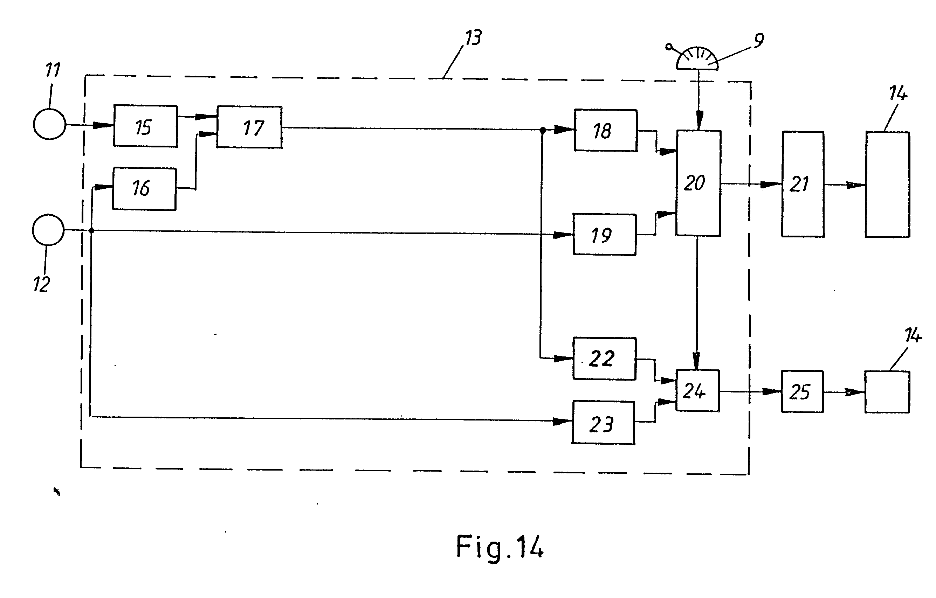

Eine andere Vereinfachung betrifft ausgeschlossen die Betätigung der Reibkupplung 3, und kann bei jedwelcher bisher bekanntgemachten Verfahrensvariante verwendet werden. Die einfachste Verwendung ist im Blockschema in Fig. 14 dargestellt.

Bei der Bekanntmachung der Betätigung der Reibkupplung 3 wurde bereits beschrieben, dass die Priorität der Aufschal tung mit dem entsprechenden Auswählen der Bedingungen des Kurzschliessens und der Schaltung in höhere Gangstufe gesichert werden kann. Das kann auch auf andere Weise verwirklicht werden.

Der Vergleichungs-Aufschaltungs-Belastungswert sf und der Vergleichungs-Kurzschluss-Belastungswert sr wurden gleich gewählt, aber mit dem Befehlsignal der die Stufenschaltung steuernden Einheit 20 bezüglich Schaltung in höhere Gangstufe wird der das Kupplungschliessen steuernden Einheit 24 ein Verbotsignal zugeführt. Wenn auf diese Weise die Bedingungen der Aufschaltung erfüllt sind, kann die das Kupplungschliessen steuernde Einheit 24 kein Befehlsignal zum Kurzschliessen geben.

Bei den bisher bekanntgemachten Varianten wurde als eine Schaltungsbedingung die Drehzahl des Motors 1 geprüft. Früher haben wir darauf hingewiesen, dass an der Austriebswelle des Wechselgetriebes 2 ein Drehzahlsignalgeber 33 eingebaut ist, dessen Drehzahlsignal ebenfalls in die Steuereinheit 13 geführt ist. Anstatt der Drehzahl des Motors 1 kann als Schaltungsbedingung auch diese Drehzahl geprüft werden.

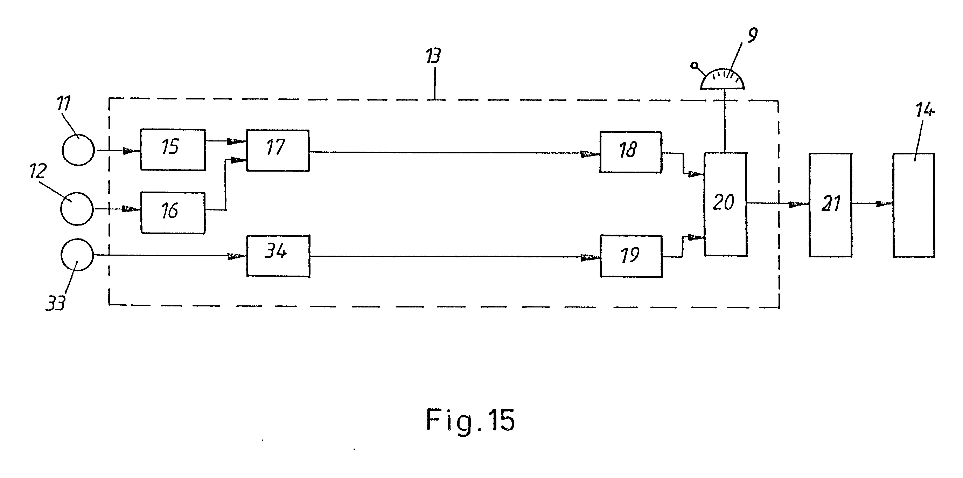

Aus dem Blockschema in Fig. 15 ist es sichtbar, dass die Drehzahl des Motors 1, die durch den Drehzahlsignalgeber 12 gesichert ist, nur zur Bestimmung des Belastungswertes s verwendet ist.

Da das Drehzahlsignal des Drehzahlsignalgebers 33 die tatsächliche Geschwindigkeit ausdrückt und nicht die Drehzahl des Motors 1, wird das in einer Gangstufen-Korrektionseinheit 34 in der der jeweiligen eingeschal teten Gangstufen entsprechenden Proportion korrigiert, und es wird ein Geschwindigkeits-Drehzahlsignal nseb erzeugt, welches in die die Drehzahl bewertende Einheit 19 geführt wird, wo es mit denselben Drehzahlwerten verglichen wird, die in den früher beschriebenen verwendet wurden. Diese Variante hat den Vorteil, dass sie auch die Wirkung des hydrodynamischen Momentwandlers 4 berücksichtigt. Diese Variante kann mit allen anderen Varianten kombiniert werden.

Bei den bekanntgemachten Verfahrensvarianten wurden die beispielsweise Daten in jedem Fall so angegeben, dass die Bedingungen der Stufenschaltung bei dem beispielsweise Motor und bei dem automatischen Wechselgetriebe mit Planetengetriebe und vier Gangstufen, insbesondere wenn die Anzahl der Gangstufen nicht vier ist, stark abweichen können, und deshalb ist es zweckmässig, diese in jedem Fall auf Versuchsweg zu bestimmen.

Man soll sich gesondert mit solchen Verfahrensvarianten beschäftigen, mit denen man ein synchronisiertes mechanisches Wechselgetriebe zu steuern wünscht.

Da bei solchen Kraftfahrzeugen das Problem der Asynchronität mit der überlappenden Schaltung der Gangstufen nicht gelöst werden kann, soll man für andere Methode sorgen.

Eine derartige Methode ist zum Beispiel die Kontrolle der Synchronlage. Da sowohl die Drehzahl des Motors als auch die Drehzahl der Antriebswelle des Wechselgetriebes fortlaufend gemessen werden, kann die Synchronlage mit deren einfacher Vergleichung kontrolliert werden. Die Synchronlage kann zum Beispiel durch das Rutschen der Kupplung zustandegebracht werden. Das Wechselgetriebe kann auch dadurch geschont werden, dass die Stufenschaltungsgabeln durch pneumatische Zylinder betätigt werden.

Alle Verfahrensvarianten können bei mechanischen synchronisierten Wechselgetrieben verwirklicht werden.

Bei der Ausbildung des das Verfahren durchführenden Systems bedeutet es eine Erleichterung, dass da in der Antriebskette kein hydrodynamischer Momentwandler eingebaut ist, die Kurzschlussbedingungen nicht geprüft werden sollen.

## Ansprüche

1. Verfahren zur Stufenschaltung von automatischen oder automatisierten mechanischen synchronisierten Wechselgetrieben in Kraftfahrzeugen, in deren Antriebskette mittels einem Verbrennungsmotor /1/ ein automatisches Wechselgetriebe /2/ durch einen darin eingebauten hydrodynamischen Momentwandler /4/ oder gegebenenfalls durch eine diesen kurzschliessende Trockenreibkupplung /3/, oder ein automatisiertes mechanisches synchronisiertes Wechselgetriebe durch eine Trockenreibkupplung, unmittelbar durch das Wechselgetriebe /2/ und/oder durch die Kardanwelle /5/ angetrieben wird, dann mindestens ein Paar Räder /8/ des Kraftfahrzeuges mit Hilfe eines Differentialwerkes /6/ und daran angeschlossener Halbwellen /7/ gedreht werden, und die Stufenschaltung des Wechselgetriebes /2/ [hier auch die Betätigung der Trockenreibkupplung /3/ und gegebenenfalls des hydrodynamischen Momentwandlers /4/] mit Hilfe von durch Schaltungsarmaturen, vorteilhaft elektromagnetischen Ventilen /14/, die durch elektrische Signale gesteuert sind, geregelter Hilfsenergie durchgeführt wird, **dadurch gekennzeichnet,** dass die Funktion [M /$\phi$/] zwischen dem Moment /M/ des Motors /1/ und der Position /$\phi$/ des Gaspedals /10/, weiterhin die funktion [M /n/] zwischen dem Moment /M/ des Motors und seiner Drehzahl /n/ bestimmt werden, diese in der Memorieneinheit /15 und 16/ einer elektronischen Steuereinheit /13/ gespeichert werden, mit Hilfe eines Gaspedalstellungsignalgebers /11/ ein elektrisches Gassignal erzeugt wird, weiterhin mit Hilfe eines Drehzahlsignalgebers /12/ auch aus der Drehzahl der Kurbelwelle des Motors /1/ oder eines damit proportional rotierenden Bauteiles des Motors /1/ ein elektrisches Drehzahlsignal /nm/ erzeugt wird, das Gassignal und das Drehzahlsignal /nm/ ebenfalls in die Memorieneinheit /15 und 16/ der elektronischen Steuereinheit /18/ zugeführt werden, wo die zum gemessenen Gassignal und zum gemessenen Drehzahlsignal gehörenden Momentwerte ausgesucht und mit ihrer Vergleichung ein Belastungssignal /s/ erzeugt werden, das derart erzeugte Belastungssignal /s/ mit Hilfe einer die Belastung bewertenden Einheit /18/ mit einem den konstanten Vergleichungs-Aufschaltungs-Belastungswert /sf/ und den konstanten Vergleichungs-Rückschaltungs-Belastungswert /sv/ ausdrückenden Signal wieder verglichen wird; das Drehzahlsignal mit Hilfe einer die Drehzahl bewertenden Einheit /19/ mit einem den konstanten Vergleichungs-Aufschaltungs-Drehzahlwert /nf/ und den konstanten Vergleichungs-Rückschaltungs-Drehzahlwert/nv/ ausdrückenden Signal ebenfalls verglichen wird, und bei Verminderung des Belastungssignals /s/ unter das den Vergleichungs-Aufschaltungs-Belastungswert /sf/ ausdrückende Signal und bei Erhöhung des Drehzahlsignals über das den Vergleichungs-Aufschaltungs-Drehzahlwert /nf/ ausdrückende Signal mit Hilfe einer die Stufenschaltung steuernden Einheit /20/ den Schaltungsarmaturen /14/ ein Befehlsignal zur Schaltung in eine höhere Gangstufe zugeführt wird, wogegen bei Erhöhung des Belastungssignals /s/ über das den Vergleichungs-Rückschaltungs-Belastungswert /sv/ ausdrückende Signal, oder bei Verminderung des Drehzahlsignals unter das den Vergleichungs-Rückschaltungs-Drehzahlwert /nv/ ausdrückende Signal mit Hilfe der die Stufenschaltung steuernden Einheit /20/ den Schaltungsarmaturen /14/ ein Befehlsignal zur Schaltung in eine niedrigere Gangstufe zugeführt wird.

2. Verfahren zur Stufenschaltung von automatischen oder automatisierten mechanischen synchronisierten Wechselgetrieben in Kraftfahrzeugen, **dadurch gekennzeichnet,** dass die Funktion [M /ϕ/] zwischen dem Moment /M/ des Motors /1/ und der Position /ϕ/ des Gaspedals /10/, weiterhin die Funktion [M /n/] zwischen dem Moment /M/ des Motors /1/ und seiner Drehzahl /n/ bestimmt werden, diese in der Memorieneinheit /15 und 16/ einer elektronischen Steuereinheit /13/ gespeichert werden; mit Hilfe eines Gaspedalstellungsignalgebers /11/ ein elektrisches Gassignal erzeugt wird, weiterhin mit Hilfe eines Drehzahlsignalgebers /12/ auch aus der Drehzahl der Kurbelwelle des Motors /1/ oder eines damit proportional rotierenden Bauteiles des Motors /1/ ein elektrisches Drehzahlsignal erzeugt wird, das Gassignal und das Drehzahlsignal ebenfalls in die Memorieneinheit /15 und 16/ der elektronischen Steuereinheit /13/ geführt werden, wo die zum gemessenen Gassignal und zum gemessenen Drehzahlsignal gehörenden Momentwerte ausgesucht und mit ihre Vergleichung ein Belastungssignal /s/ erzeugt werden; aus der Drehzahl jedwelchen Bauteiles oder aus der Durchschnittsdrehzahl jedwelchen Bauteilpaares des mit der Eintriebswelle des Stufenteiles des Wechselgetriebes /2/ beginnenden und mit den Rädern /8/ endenden Teiles der Antriebskette des Kraftfahrzeuges mit Hilfe eines Drehzahlsignalgebers /33/ und gegebenenfalls mit Hilfe einer der Transmission der jeweiligen eingeschalteten Gangstufe entsprechenden modifizierenden Gangstufen-Korrektionseinheit /34/ ein Geschwindigkeitsdrehzahlsignal /nseb/ erzeugt wird, und das Belastungssignal /s/ mit Hilfe einer die Belastung bewertenden Einheit /18/ mit einem den konstanten Vergleichungs-Aufschaltungs-Belastungswert /sf/ und den konstanten Vergleichungs-Rückschaltungs-Belastungswert /sv/ ausdrückenden Signal wieder verglichen wird, das Geschwindigkeitsdrehzahlsignal /nseb/ mit Hilfe einer die Drehzahl bewertenden Einheit /19/ mit einem den konstanten Vergleichungs-Aufschaltungs-Drehzahlwert /nf/ und den konstanten Vergleichungs-Rückschaltungs-Drehzahlwert /nv/ ausdrückenden Signal ebenfalls verglichen wird, und bei Verminderung des Belastungssignals /s/ unter das den Vergleichungs-Aufschaltungs-Belastungswert /sf/ ausdrückende Signal und bei Erhöhung des Geschwindigkeitsdrehzahlsignals /nseb/ über das den Vergleichungs-Aufschaltungs-Drehzahlwert /nf/ ausdrückende Signal mit Hilfe einer die Stufenschaltung steuernden Einheit /20/ den Schaltungsarmaturen /14/ ein Befehlsignal zur Schaltung in eine höhere Gangstufe zugeführt wird, wogegen bei Erhöhung des Belastungs signals /s/ über das den Vergleichungs-Rückschaltungs-Belastungswert /sv/ ausdrückende Signal, oder bei Verminderung des Geschwindigkeits-Drehzahlsignals /nseb/ unter das den Vergleichungs-Rückschaltungs-Drehzahlwert /nv/ ausdrückende Signal mit Hilfe der die Stufenschaltung steuernden Einheit /20/ den Schaltungsarmaturen /14/ ein Befehlsignal zur Schaltung in eine niedrigere Gangstufe zugeführt wird.

3. Verfahren nach Anspruch 1 oder 2, **dadurch gekennzeichnet,** dass das Belastungssignal /s/ mit Hilfe einer die Belastung bewertenden Einheit /22/ mit einem den zum Kurzschliessen des hydrodynamischen Momentwandlers /4/ gehörenden Vergleichungs-Kurzschluss-Belastungswert /sr/ ausdrückenden Signal, das die Drehzahl der Kurbelwelle des Motors /1/ ausdrückende Drehzahlsignal /nm/ oder das Geschwindigkeitsdrehzahlsignal /nseb/ mit Hilfe einer die Drehzahl bewertenden Einheit /23/ mit einem den Vergleichungs-Kurzschluss-Drehzahlwert /nr/ ausdrückenden Signal und einem den Vergleichungs-Auflösungs-Drehzahlwert /no/ ausdrückenden Signal verglichen werden, und bei Erhöhung des Drehzahlsignals /nm; nseb/ über das den Vergleichungs-Kurzschluss-Drehzahlwert /nr/ ausdrückende Signal und bei Verminderung des Belastungssignals /s/ unter das den Vergleichungs-Kurzschluss-Belastungswert /sr/ ausdrückende Signal mit Hilfe einer die Kupplungschliessung steuernden Einheit /24/ den den hydrodynamischen Momentwandler /4/ kurzschliessenden Schaltungsarmaturen /14/ ein Befehlsignal zum Kurzschliessen zugeführt wird, und bei Verminderung des Drehzahlsignals /nm; nseb/ unter das den Vergleichungs-Auflösungs-Drehzahlwert /no/ ausdrückende Signal ein Befehlsignal zur Auflösung zugeführt wird.

4. Verfahren nach einem der Ansprüche 1 bis 3, **dadurch gekennzeichnet,** dass das die Drehzahl der Kurbelwelle des Motors /1/ ausdrückende Drehzahlsignal /nm/ oder das Geschwindigkeitsdrehzahlsignal /nseb/ in eine Memorieneinheit /26/ geführt wird und das momentane Drehzahlsignal /nm; nseb/ mit dem Befehlsignal der die Stufenschaltung steuernden Einheit /20/ bezüglich Zurückschaltung in eine niedrigere Gangstufe gespeichert wird, dann mit Hilfe einer das Vergleichungs-Belastungssignal erzeugenden Einheit /27/ das den Vergleichungs-Aufschaltungs-Belastungswert /sf/ ausdrückende Signal und/oder gegebenenfalls das den Vergleichungs-Kurzschluss-Belastungswert /sr/ ausdrückende Signal um einen vom gespeicherten Drehzahlsignal /nm; nseb/ abhängigen Korrektionswert /sk/ vermindert werden.

5. Verfahren nach einem der Ansprüche 1 bis 3, **dadurch gekennzeichnet,** dass das die Drehzahl der Kurbelwelle des Motors /1/ ausdrückende Drehzahlsignal /nm/ oder das Geschwindigkeitsdrehzahlsignal /nseb/ in eine Memorieneinheit /26/ geführt wird und das momentane Drehzahlsignal /nm; nseb/ mit dem Befehlsignal der die Stufenschaltung steuernden Einheit /20/ bezüglich Zurückschaltung in eine niedrigere Gangstufe gespeichert wird, dann mit Hilfe einer das Vergleichungs-Dreh zahlsignal erzeugenden Einheit /28/ das den Vergleichungs-Aufschaltungs-Drehzahlwert /nf/ ausdrückende Signal und/oder gegebenenfalls das den Vergleichungs-Kurzschluss-Drehzahlwert /nr/ ausdrückende Signal um einen vom gespeicherten Drehzahlsignal abhängigen Korrektionswert /nk/ erhöht werden.

6. Verfahren nach einem der Ansprüche 1 bis 3, **dadurch gekennzeichnet,** dass mit dem Befehlsignal der die Stufenschaltung steuernden Einheit /20/ bezüglich Zurückschaltung in eine niedrigere Gangstufe das den Vergleichungs-Aufschaltungs-Drehzahlwert /nf/ ausdrückende Signal und/oder das den Vergleichungs-Kurzschluss-Drehzahlwert /nr/ ausdrückende Signal um einen bestimmten Wert erhöht werden, oder das den Vergleichungs-Aufschaltungs-Belastungswert /sf/ ausdrückende Signal und/oder gegebenenfalls das den Vergleichungs-Kurzschluss-Belastungswert /sr/ ausdrückende Signal um einen bestimmten Wert vermindert werden.

7. Verfahren nach Anspruch 1 oder 2, **dadurch gekennzeichnet,** dass aus dem die Drehzahl der Kurbelwelle des Motors /1/ ausdrückenden Drehzahlsignal /nm/ oder aus dem Geschwindigkeitsdrehzahlsignal /nseb/ in einer die Drehzahlveränderung bewertenden Einheit /30/ ein Drehzahlveränderungssignal /vn/ und gegebenenfalls aus dem Belastungssignal /s in einer die Belastungsänderung bewertenden Einheit /29/ ein Belastungsänderungssignal /vs/ erzeugt werden, und mit dem Befehlsignal der die Stufenschaltung steuernden Einheit /20/ bezüglich Zurückschaltung in eine niedrigere Gangstufe aus den momentanen Werten bei negativem Drehzahlveränderungssignal /vn/ und bei einem die Drehzahl der Kurbelwelle des Motors /1/ ausdrückenden Drehzahlsignal /nm/ unterhalb des Schwellenwertes oder einem negativen Belastungsänderungssignal /vs/ ein den konstanten normalen Vergleichungs-Belastungswert ausdrückendes Signal, und bei positivem Drehzahlveränderungssignal /vn/ und bei einem die Drehzahl der Kurbelwelle des Motors /1/ ausdrückenden Drehzahlsignal /nm/ oberhalb des Schwellenwertes oder einem positiven Belastungsänderungssignal /vs/ ein um den vorherigen geringeren konstanten Vorfahrts-Vergleichungs-Belastungswert ausdrückendes Signal, weiterhin bei negativem Drehzahlveränderungssignal /vn/ und bei einem die Drehzahl der Kurbelwelle des Motors /1/ ausdrückenden Drehzahlsignal /nm/ oberhalb des Schwellenwertes oder bei positivem Belastungsänderungssignal /vs/ ein ganz geringen konstanten Aufwärtsfahrt-Vergleichungs-Belastungswert ausdrückendes Signal erzeugt werden, und die derart erzeugten Signale in die die Belastung bewertende Einheit /18/ geführt werden.

8. Verfahren nach einem der Ansprüche 1, 2 oder 7, **dadurch gekennzeichnet,** dass mit dem Befehlsignal der die Stufenschaltung steuernden Einheit /20/ bezüglich Zurückschaltung in eine niedrigere Gangstufe bei negativem Drehzahlveränderungssignal /vn/ und bei einem die Drehzahl der Kurbelwelle des Motors /1/ ausdrückenden Drehzahlsignal /nm/ oberhalb des Schwellen wertes oder bei positivem Belastungsänderungssignal /vs/ ein ganz geringen konstanten Aufwärtsfahrt-Vergleichungs-Belastungswert ausdrückendes Signal, und in jedem anderen Fall ein konstanten normalen Vergleichungs-Belastungswert ausdrückendes Signal erzeugt wird.

9. Verfahren nach einem der Ansprüche 1 bis 8, **dadurch gekennzeichnet,** dass das den Vergleichungs-Aufschaltungs-Belastungswert /sf/ ausdrückende Signal und das den Vergleichungs-Kurzschluss-Belastungswert /sr/ ausdrückende Signal gleich sind, und bei Verminderung des Belastungssignals /s/ unter das den Vergleichungs-Aufschaltungs-Belastungswert /sf/ ausdrückende Signal und bei Erhöhung des für die die Drehzahl bewertende Einheit /19/ gewählten Drehzahlsignals /nm; nseb/ über das den Vergleichungs-Aufschaltungs-Drehzahlwert /nf/ ausdrückende Signal der die Kupplungschliessung steuernden Einheit /24/ mit dem Befehlsignal der die Stufenschaltung steuernden Einheit /20/ bezüglich Schaltung in eine höhere Gangstufe gleichzeitig ein Verbotsignal zugeführt wird.

10
11
9
R D III II I
P N
12
1
14
3
4
2
34
5
13
7
6
7
8
8

Fig.1

M(φ)
[Nm]
675
0
23°
φ [°]

Fig. 2

M(n)
[Nm]
675
0
2200
n [f/p]

Fig.3

IC8
IC7
IC1
21,25
14
IC2
IC5
IC9
IC6
IC3
I.
II.
III.
D.
R.
P.
9
IC4
13
11
12

Fig.4

n
[f/p]
2200
R
F
$n_f = 1200$
$n_r = 1100$
$n_o = 900$
$n_v = 870$
V
0
$s_r = 20$
$s_f = 25$
$s_v = 50$
100
s [%]

Fig.5

M(n)
[Nm]
675
Mmot.
Mhd
0
1000
2200
n [f/p]

Fig.6

14
21
9
20
18
19
13
17
15
16
11
12

Fig. 7

14
14
21
25
9
20
24
18
19
22
23
13
17
15
16
11
12

Fig. 8

14
14
21
25
9
20
24
18
19
22
23
13
27
26
17
15
16
11
12

Fig. 9

14
14
9
21
25
20
24
18
19
22
23
13
28
26
17
15
16
12
12

Fig.10

14
2
14
25
9
20
24
18
19
22
23
13
17
15
16
11
12

Fig. 11

14
21
14
25
9
20
24
18
19
22
23
13
17
15
16
11
12

Fig.12

14
21
14
25
9
20
24
18
19
22
33
13
31
29
30
17
15
16
11
12

Fig.13

14
14
9
21
25
20
24
18
19
22
23
13
17
15
16
11
12

Fig.14

14
21
9
20
18
19
13
17
34
15
16
11
12
33

Fig.15

Europäisches Patentamt

# EUROPÄISCHER RECHERCHENBERICHT

Nummer der Anmeldung

EP 88 11 5736

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 120 191 (WABCO WESTINGHOUSE) * ganzes Dokument * | 1, 2, 7 | B 60 K 41/22<br>B 60 K 41/06 |
| X | EP-A-0 126 201 (WABCO WESTINGHOUSE) * Seite 6, Zeilen 26-31; Ansprüche 1, 2, 4, 15, 16, 20 * | 1, 2, 7 | |
| A | DE-A-2 852 195 (BOSCH) * Seite 11, Zeile 19 - Seite 12, Zeile 18; Zusammenfassung; Figur 3 a * | 1,2 | |
| A | DE-A-3 539 682 (DIESEL KIKI) * Seite 9, Zeile 6 - Seite 10, Zeile 34; Anspruch 1 * | 1, 2, 7 | |
| A | DE-A-3 621 674 (VOLKSWAGEN) * Ansprüche 1-4 * | 7 | |
| A | EP-A-0 123 102 (TOYO KOGYO) * Zusammenfassung; Figur 10 * | 3 | RECHERCHIERTE SACHGEBIETE (Int. Cl.4) |
| D,A | DE-A-2 425 607 (FERRANTI) * Anspruch 1 * | 2 | B 60 K 41/00<br>B 60 K 20/00 |

Der vorliegende Recherchenbericht wurde für alle Patentansprüche erstellt

| Recherchenort | Abschlußdatum der Recherche | Prüfer |
|---|---|---|
| BERLIN | 21-12-1988 | KRIEGER P O |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)